# EUROPEAN PATENT APPLICATION

(11) **EP 2 541 170 A1**
(43) Date of publication of application: **02.01.2013**
(21) Application number: 10846541.0
(22) Date of filing: 26.02.2010
(51) Int. Cl.: F25B 29/00, F24F 5/00, F24H 1/00

(54) **AIR-CONDITIONING HOT-WATER-SUPPLY SYSTEM**

(71) Applicant: Hitachi, Ltd., Chiyoda-ku Tokyo 100-8280 (JP)
(72) Inventor: KOMATSU Tomohiro, Chiyoda-ku, Tokyo 100-8220 (JP); KOTANI Masanao, Chiyoda-ku, Tokyo 100-8220 (JP); UCHIDA Mari, Chiyoda-ku, Tokyo 100-8220 (JP); KOKUGAN Yoko, Chiyoda-ku, Tokyo 100-8220 (JP)
(74) Representative: Beetz & Partner
(86) International application number: PCT/JP2010/053140
(87) International publication number: WO 2011/104877

(57) **Abstract**

[Problem]

To significantly reduce power consumption by performing a cooling operation by a natural circulation type cycle.

[Solution]

An air conditioning hot water supply system of the present invention includes: an air conditioning refrigerant circuit 5 performing a cooling operation and a heating operation; a hot water supplying refrigerant circuit 6 supplying hot water; and an intermediate heat exchanger 23 exchanging heat between the air conditioning refrigerant circuit and the hot water supplying refrigerant circuit. The air conditioning refrigerant circuit includes an air conditioning refrigerant main circuit 5a that is formed in a loop by sequentially connecting an air conditioning compressor 21, an air conditioning flow path switching valve 22, the intermediate heat exchanger 23, an air conditioning expansion valve 27a, and an air conditioning user-side heat exchanger 28 through a refrigerant pipe, a first air conditioning refrigerant branch path 5b bypassing the air conditioning compressor, and a second air conditioning refrigerant branch path 5c bypassing the intermediate heat exchanger. An air conditioning heat source-side heat exchanger 24 is installed on the second air conditioning refrigerant branch path. At least one of the intermediate heat exchanger 23 and the air conditioning heat source-side heat exchanger 24 is installed at a position higher than the air conditioning user-side heat exchanger 28.

## Description

### TECHNICAL FIELD

The present invention relates to an air conditioning hot water supply system, and particularly, is suitable to an air conditioning hot water supply system in which cascade refrigerating cycle of an air conditioning cycle and a hot water supply cycle is formed by connecting an air conditioning refrigerant circuit switching cooling and heating and a hot water supplying refrigerant circuit supplying hot water through an intermediate heat exchanger to exchange heat each other.

### BACKGROUND ART

This type of air-conditioning hot water supply system is, for example, disclosed in Patent Document 1. Patent Document 1 discloses a system having a high-temperature cycle performing a high-temperature output and an intermediate-temperature cycle performing an intermediate-temperature output or low-temperature output and configured with an evaporator of the high-temperature cycle and a condenser of an intermediate-temperature cycle capable of exchanging heat. According to the technique of Patent Document 1, since exhaust heat of the intermediate-temperature cycle can be effectively used as the high-temperature cycle, an economic operation can be achieved.

A refrigeration cycle includes a refrigeration cycle formed by forcibly circulating refrigerant pressure-risen by a compressor in a circuit and a refrigeration cycle formed as the refrigerant in the circuit is naturally circulated due to a pressure gradient generated by a difference in density of the refrigerant. In the following description, the former will be referred to as a vapor compression cycle and the latter will be referred to as a natural circulation type cycle.

### CITATION LIST

### PATENT LITERATURE

PATENT LITERATURE 1: JP-A No. 1992-32669

### SUMMARY OF INVENTION

### TECHNICAL PROBLEM

However, in the related art, only when the intermediate-temperature cycle and the high-temperature cycle are operated simultaneously, the exhaust heat of the intermediate-temperature cycle can be effectively used. That is, in the related art, when the intermediate-temperature cycle or the high-temperature cycle is independently operated, the exhaust heat cannot be used. As a result, in the related art, energy consumption cannot be significantly reduced.

The present invention is contrived to solve the problems and an object of the present invention is to provide an air conditioning and hot water supply system that effectively uses exhaust hot and heat of relatively low temperature of the refrigerant circuit and can acquire high energy efficiency. Another object of the present invention is to provide an air conditioning hot water supply system that can significantly reduce power consumption by performing a cooling operation of a natural circulation type cycle using a difference in density of the refrigerant.

### SOLUTION TO PROBLEM

In order to solve the problem, an air conditioning hot water supply system according to the present invention includes: an air conditioning refrigerant circuit performing a cooling operation and a heating operation by switching the cooling operation and the heating operation; a hot water supplying refrigerant circuit supplying hot water; and an intermediate heat exchanger exchanging heat between air conditioning refrigerant circulated in the air conditioning refrigerant circuit and hot water supplying refrigerant circulated in the hot water supplying refrigerant circuit, wherein the air conditioning refrigerant circuit includes an air conditioning refrigerant main circuit that is formed in a loop by sequentially connecting an air conditioning compressor, an air conditioning flow path switching valve, the intermediate heat exchanger, an air conditioning expansion valve, and an air conditioning user-side heat exchanger for exchanging heat with an air conditioning user-side heat transfer medium through a refrigerant pipe, the hot water supplying refrigerant circuit includes a hot water supplying main circuit that is formed in a loop by sequentially connecting a hot water supplying compressor, a hot water supplying user-side heat exchanger exchanging heat with a hot water supplying user-side heat transfer medium, a hot water supplying expansion valve, and the intermediate heat exchanger through the refrigerant pipe, a first air conditioning refrigerant branch path bypassing the air conditioning compressor and a second air conditioning refrigerant branch path bypassing the intermediate heat exchanger are installed in the air conditioning refrigerant main circuit, air conditioning bypass opening/closing means that switches a flow path of the air conditioning refrigerant to any one of a flow paths passing through the air conditioning compressor and a flow path passing through the first air conditioning refrigerant branch path is installed on the first air conditioning refrigerant branch path, an air conditioning heat source-side heat exchanger for exchanging heat between an air conditioning heat source-side heat transfer medium and the air conditioning refrigerant is installed on the second air conditioning refrigerant branch path, and at least one of the intermediate heat exchanger and the air conditioning heat source-side heat exchanger is installed at a position higher than the air conditioning user-side heat exchanger.

According to the present invention, since the air conditioning refrigerant that flows on the air conditioning refrigerant circuit and the hot water supplying refrigerant that flows on the hot water supplying refrigerant circuit can exchange heat with each other by the intermediate heat exchanger, exhaust heat of an air conditioning cycle and a hot water supply cycle may be effectively used. Accordingly, in the present invention, high energy efficiency may be acquired. Further, according to the present invention, a first air conditioning refrigerant branch path bypassing an air conditioning compressor is installed and at least one of the intermediate heat exchanger and the air conditioning heat source-side heat exchanger is installed at a position higher than the air conditioning user-side heat exchanger, and as a result, a natural circulation type cycle may be formed in the air conditioning refrigerant circuit. Therefore, in the present invention, since a cooling operation may be performed while the air conditioning compressor is stopped, power consumption may be significantly reduced. A first air conditioning refrigerant branch path of the present invention may be configured to bypass the air conditioning compressor and for example, even though the first air conditioning refrigerant branch path may be configured to bypass both the air conditioning compressor and the air conditioning flow path switching valve, the configuration is included in the first air conditioning refrigerant branch path of the present invention as long as the first air conditioning refrigerant branch path is configured to bypass the air conditioning compressor.

Further, in the above configuration of the present invention, the following natural circulation type cycle may be formed in the air conditioning refrigerant circuit.

That is, in the above configuration of the present invention, a natural circulation type cycle may be formed in the air conditioning refrigerant circuit, in which the air conditioning refrigerant flows from the air conditioning heat source-side heat exchanger to the air conditioning expansion valve and the air conditioning user-side heat exchanger in sequence and returns to the air conditioning heat source-side heat exchanger due to a difference in density.

Further, in the configuration of the present invention, a natural circulation type cycle may be formed in the air conditioning refrigerant circuit, in which the air conditioning refrigerant flows from the intermediate heat exchanger to the air conditioning expansion valve and the air conditioning user-side heat exchanger in sequence and returns to the intermediate heat exchanger due to the difference in density.

In the configuration of the present invention, the air conditioning user-side heat exchanger may be bi-divided into a first air conditioning user-side division heat exchanger at the air conditioning compressor side and a second air conditioning user-side division heat exchanger at the air conditioning expansion valve side and further, the first air conditioning user-side division heat exchanger and the second air conditioning user-side division heat exchanger may be connected through a connection refrigerant pipe, and a third air conditioning refrigerant branch path connected from a position between the intermediate heat exchanger and the air conditioning expansion valve to the connection refrigerant pipe may be installed in the air conditioning refrigerant main circuit, and an air conditioning auxiliary expansion valve may be installed on the third air conditioning refrigerant branch path.

In the configuration of the present invention, a fourth air conditioning refrigerant branch path connected from a position at the air conditioning compressor side rather than the air conditioning heat source-side heat exchanger to the connection refrigerant pipe may be installed on the second air conditioning refrigerant branch path.

In the configuration of the present invention, a fifth air conditioning refrigerant branch path connected from a position between the air conditioning expansion valve and the second air conditioning user-side division heat exchanger to a position at the first air conditioning user-side division heat exchanger side rather than the air conditioning auxiliary expansion valve on the third air conditioning refrigerant branch path may be installed on the air conditioning refrigerant main circuit.

According to the present invention, both a vapor compression cycle and the natural circulation type cycle may be formed and further, the plurality of natural circulation type cycles may be formed, in the air conditioning refrigerant circuit, and as a result, an optimal operation may be performed in accordance with a situation of a cooling/heating load. Accordingly, in the present invention, energy efficiency is further increased and further, power consumption may also be significantly reduced.

In the above configuration of the present invention, a first hot water supplying refrigerant branch path bypassing the intermediate heat exchanger may be installed in the hot water supplying refrigerant main circuit, a hot water supplying heat source-side heat exchanger for exchanging heat between the hot water supplying heat source-side heat transfer medium and the hot water supplying refrigerant may be installed on the first hot water supplying refrigerant branch path, and the hot water supplying heat source-side heat exchanger may be installed at a position higher than the intermediate heat exchanger, a second hot water supplying refrigerant branch path connected from a position between the hot water supplying user-side heat exchanger and the hot water supplying expansion valve in the hot water supplying refrigerant main circuit to a position at an inlet side of the hot water supplying heat source-side heat exchanger in the first hot water supplying refrigerant branch path may be installed in the hot water supplying refrigerant circuit, and hot water supplying bypass opening/closing means opening/closing the second hot water supplying refrigerant branch path may be installed in the second hot water supplying refrigerant circuit.

According to the present invention, in the hot water supplying refrigerant circuit, the hot water supplying heat source-side heat exchanger is used as a condenser and the intermediate heat exchanger is used as the evaporator to form the natural circulation type cycle in which the hot water supplying refrigerant is naturally circulated, and as a result, in the air conditioning cycle, two heat exchangers of the intermediate heat exchanger and the air conditioning heat source-side heat exchanger may be used as the condensers. Accordingly, in the present invention, since an exchangeable heat amount is increased, performance of the cooling operation may be improved. Further, in the present invention, since the performance of the cooling operation is improved by using the natural circulation type cycle formed in the hot water supplying refrigerant circuit, the hot water supplying compressor need not be operated. Accordingly, in the present invention, power consumption may be significantly reduced.

Further, in the above configuration of the present invention, the following natural circulation type cycle is preferably formed in the air conditioning refrigerant circuit.

That is, in the configuration of the present invention, a vapor compression cycle in which the air conditioning refrigerant flows from a discharge port of the air conditioning compressor to the intermediate heat exchanger, the air conditioning auxiliary expansion valve, and the first air conditioning user-side division heat exchanger in sequence and forcibly returns to a suction port of the air conditioning compressor and a natural circulation type cycle in which the air conditioning refrigerant flows from the air conditioning heat source-side heat exchanger to the air conditioning expansion valve and the second air conditioning user-side division heat exchanger in sequence and returns to the air conditioning heat source-side heat exchanger are preferably formed in the air conditioning refrigerant circuit due to the difference in density.

Further, in the above configuration of the present invention, two natural circulation type cycles of a natural circulation type cycle in which the air conditioning refrigerant flows from the intermediate heat exchanger to the air conditioning auxiliary expansion valve and the first air conditioning user-side division heat exchanger in sequence and returns to the intermediate heat exchanger due to the difference in density and a natural circulation type cycle in which the air conditioning refrigerant flows from the air conditioning heat source-side heat exchanger to the air conditioning expansion valve and the second air conditioning user-side division heat exchanger in sequence and returns to the air conditioning heat source-side heat exchanger are preferably formed in the air conditioning refrigerant circuit due to the difference in density.

Further, in the above configuration of the present invention, a natural circulation type cycle in which the air conditioning refrigerant flows from the air conditioning heat source-side heat exchanger to the air conditioning expansion valve, and at least one of the first air conditioning user-side division heat exchanger and the second air conditioning user-side division heat exchanger in sequence and returns to the air conditioning heat source-side heat exchanger due to the difference in density is preferably formed in the air conditioning refrigerant circuit.

Further, in the above configuration of the present invention, a natural circulation type cycle in which the hot water supplying refrigerant flows from the hot water supplying heat source-side heat exchanger to the hot water supplying expansion valve and the intermediate heat exchanger through the second hot water supplying refrigerant branch path in sequence, and returns to the hot water supplying heat source-side heat exchanger due to the difference in density is preferably formed in the hot water supplying refrigerant circuit.

According to the present invention, it is possible to significantly reduce power consumption and further, it is possible to cope with various operation requirements.

Further, in the above configuration of the present invention, an air conditioning heat transfer medium circulation circuit may be formed by connecting the air conditioning user-side heat exchanger and an indoor heat exchanger installed in a cooled space through a pipe and water or brine as the air conditioning user-side heat transfer medium may be circulated in the air conditioning heat transfer medium circulation circuit.

According to the present invention, a refrigerant pipe connecting an indoor unit and an outdoor unit in the related art is not required and further, the amount of refrigerant may be small. When the natural circulation type cycle is formed in the configuration in which the indoor unit and the outdoor unit are connected with each other by the refrigerant pipe in the related art, the outdoor unit needs to be installed at a position higher than the indoor unit and a layout thereof is limited. However, according to the present invention, since a user-side heat transfer medium circulation circuit is installed, a degree of freedom of the layout is increased.

Further, in the above configuration of the present invention, a hot water supply circuit may be formed in a loop by connecting the hot water supplying user-side heat exchanger and a hot water storage tank capable of storing heat through a pipe and water as a hot water supplying user-side heat transfer medium may be circulated in the hot water supply circuit.

According to the present invention, since heat of relatively high temperature acquired from the hot water supplying user-side heat exchanger may be stored in the hot water storage tank by collecting air conditioning exhaust heat, thermal energy is effectively used and energy efficiency is improved. Further, in the present invention, since the hot water storage tank may store heat, a difference in time zone between an air conditioning load and a hot water supply load may be resolved.

Further, in the above configuration of the present invention, an intermediate heat medium circuit may be formed in a loop by connecting the intermediate heat exchanger and a heat storage tank capable of storing heat through a pipe and water may be circulated in the intermediate heat medium circuit to exchange heat among three fluids of an air conditioning refrigerant circulated in the air conditioning refrigerant circuit, hot water supplying refrigerant circulated in the hot water supplying refrigerant circuit, and water circulated in the intermediate heat medium circuit through the intermediate heat exchanger.

According to the present invention, the intermediate heat medium circuit receives exhaust heat discharged from the air conditioning refrigerant circuit through the intermediate heat exchanger and the exhaust heat is stored in the heat storage tank to be used for supplying hot water. Further, the heat stored in the intermediate heat medium circuit may be dissipated to the air conditioning refrigerant circuit and the hot water supplying refrigerant circuit through the intermediate heat exchanger. Accordingly, in the present invention, exhaust heat may be effectively used, energy loss is unlimitedly suppressed, and the operation may be performed with high energy efficiency. Further, in the present invention, since the heat storage tank may store heat, the difference in time zone between the air conditioning load and the hot water supply load may be resolved.

### ADVANTAGEOUS EFFECT OF INVENTION

According to the present invention, high energy efficiency can be acquired by effectively using exhaust hot and heat of relatively low temperature of the refrigerant circuit. In the present invention, since the cooling operation by the natural circulation type cycle using the difference in density of the refrigerant can be performed, the power consumption can be significantly reduced.

### BRIEF DESCRIPTION OF DRAWINGS

FIG. 1 is a systematic diagram of an air conditioning hot water supply system according to an embodiment of the present invention.
FIG. 2 is a systematic diagram illustrating, in detail, an air conditioning refrigerant circuit illustrated in FIG. 1.
FIG. 3 is a systematic diagram illustrating, in detail, a hot water supplying refrigerant circuit illustrated in FIG. 1.
FIG. 4 is a systematic diagram illustrating, in detail, an intermediate-temperature water circulation circuit illustrated in FIG. 1.
FIG. 5 is a systematic diagram illustrating, in detail, an air conditioning cold/hot water circulation circuit illustrated in FIG. 1.
FIG. 6 is a systematic diagram illustrating, in detail, a hot water supply circuit illustrated in FIG. 1.
FIG. 7 is a systematic diagram illustrating, in detail, a solar heat circulation circuit illustrated in FIG. 1.
FIG. 8 is a systematic diagram illustrating, in detail, a hot water supply path illustrated in FIG. 1.
FIG. 9 is a systematic diagram illustrating, in detail, a hot water supply and residual heat hot water circulation circuit illustrated in FIG. 1.
FIG. 10 is an operational diagram illustrating a flow of refrigerant and a heat transfer medium in Operation pattern No. 1 of the air conditioning hot water supply system illustrated in FIG. 1.
FIG. 11 is an operational diagram illustrating the flow of the refrigerant and the heat transfer medium in Operation pattern No. 2 of the air conditioning hot water supply system illustrated in FIG. 1.
FIG. 12 is an operational diagram illustrating the flow of the refrigerant and the heat transfer medium in Operation pattern No. 3 of the air conditioning hot water supply system illustrated in FIG. 1.
FIG. 13 is an operational diagram illustrating the flow of the refrigerant and the heat transfer medium in Operation pattern No. 4 of the air conditioning hot water supply system illustrated in FIG. 1.
FIG. 14 is an operational diagram illustrating the flow of the refrigerant and the heat transfer medium in Operation pattern No. 5 of the air conditioning hot water supply system illustrated in FIG. 1.
FIG. 15 is an operational diagram illustrating the flow of the refrigerant and the heat transfer medium in Operation pattern No. 6 of the air conditioning hot water supply system illustrated in FIG. 1.
FIG. 16 is a diagram for describing a state of each device in Operation pattern Nos. 1 to 6 of the air conditioning hot water supply system illustrated in FIG. 1.
FIG. 17 is a diagram illustrating a representative example of an operation mode using the air conditioning hot water supply system illustrated in FIG. 1.

### DESCRIPTION OF EMBODIMENTS

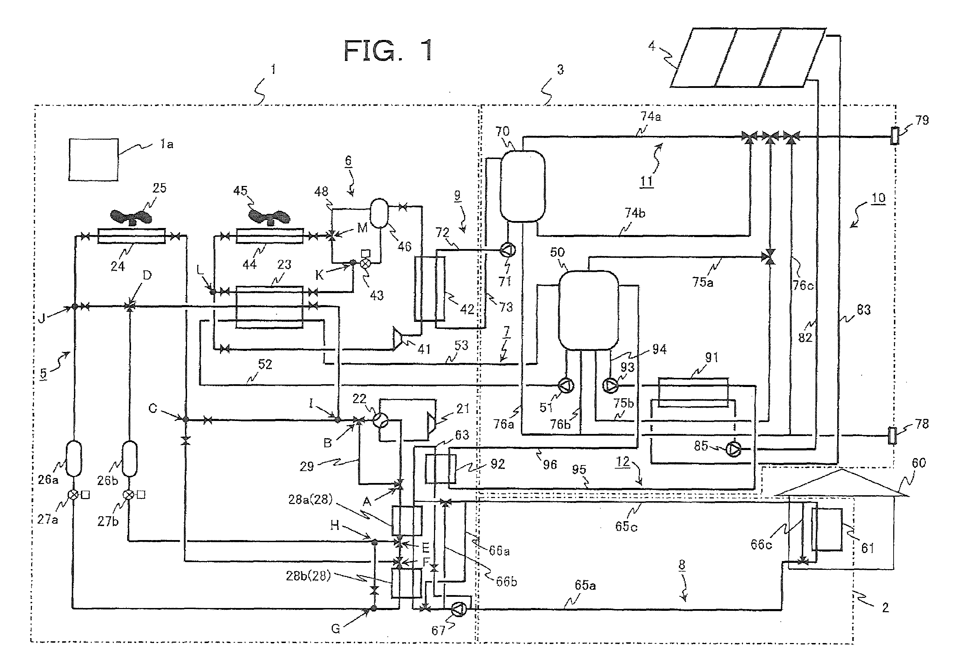

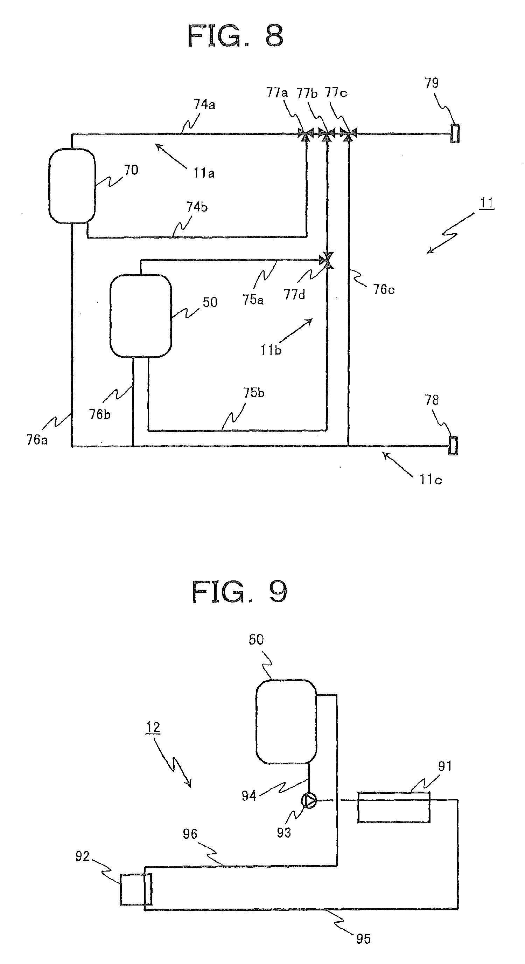

First, a configuration of an air conditioning hot water supply system according to an embodiment of the present invention will be described with reference to FIGS. 1 to 9.

The air conditioning hot water supply system according to the embodiment of the present invention includes an air conditioning refrigerant circuit 5 switching and performing a cooling operation and a heating operation, a hot water supplying refrigerant circuit 6 supplying hot water, an intermediate hot water circulation circuit (intermediate heat medium circuit) 7 circulating water for exchanging heat with the air conditioning refrigerant circuit 5 and the hot water supplying refrigerant circuit 6, an air conditioning cold/hot water circulation circuit (air conditioning heat transfer medium circulation circuit) 8 conditioning indoor air of a housing (cooled space) 60, a hot water supply circuit 9 circulating water for exchanging heat with the hot water supplying refrigerant circuit 6, a solar heat circulation circuit 10 circulating water or brine in which solar heat collected by a solar heat collector 4 is stored, a hot water supply path 11 supplying high-temperature water (hot water) to the outside, and a hot water supply residual heat hot water circulation circuit 12 circulating water for exchanging heat with the air conditioning cold/hot water circulation circuit and the solar heat circulation circuit, as illustrated in FIG. 1.

The air conditioning hot water supply system has a unit configuration including a heat pump unit 1 placed outdoors, an indoor unit 2 placed indoors, a hot water supply and heat storage tank unit 3 placed outdoors, and a solar heat collector 4 placed outdoors. The units are discriminated by ranges surrounded by a dashed line, respectively, as illustrated in FIG. 1.

The air conditioning refrigerant circuit 5 which is a circuit where air conditioning refrigerant is circulated is formed in a loop by connecting an air conditioning compressor 21 compressing the refrigerant for conditioning air, a 4-way valve (air conditioning flow path switching valve) 22 switching a flow path of the refrigerant for conditioning air, an intermediate heat exchanger 23, an air conditioning heat source-side heat exchanger 24 exchanging heat with air sent by a fan 25, a first air conditioning refrigerant tank 26a as a buffer controlling the amount of air conditioning refrigerant varied by switching a flow path, a second air conditioning refrigerant tank 26b, an air conditioning expansion valve 27a and an air conditioning auxiliary expansion valve 27b depressurizing the air conditioning refrigerant, and an air conditioning user-side heat exchanger 28 exchanging heat with the air conditioning cold/hot water circulation circuit 8 through a refrigerant pipe. A refrigeration cycle (air conditioning cycle) for conditioning air is formed by the air conditioning refrigerant circuit 5.

The air conditioning compressor 21 is a variable capacity compressor of which a capacity is controllable. As this kind of compressor, a piston-type compressor, a rotary-type compressor, a scroll-type compressor, a screw-type compressor, and a centrifugal-type compressor may be adopted. In detail, the air conditioning compressor 21 is the scroll-type compressor in which the capacity may be controlled by inverter controlling and a rotational speed is varied from a low speed up to a high speed.

The intermediate heat exchanger 23 has a structure in which three fluids of the air conditioning refrigerant that is circulated in the air conditioning refrigerant circuit 5, the hot water supplying refrigerant that is circulated in the hot water supplying refrigerant circuit 6, and the water that is circulated in the intermediate hot water circulation circuit 7 may exchange heat one another. In detail, the intermediate heat exchanger 23 is inserted into an outer pipe (not illustrated) where the water of the intermediate hot water circulation circuit 7 flows with the air conditioning refrigerant heat transfer pipe (not illustrated) where the air conditioning refrigerant flows and the hot water supplying refrigerant heat transfer pipe (not illustrated) where the hot water supplying refrigerant flows joined to each other. By this configuration, exhaust heat of the air conditioning circuit 5 and exhaust heat of the hot water supplying circuit 6, and heat stored in the intermediate hot water circulation circuit 7 may be effectively used with each other. In the embodiment, the air conditioning refrigerant heat transfer pipe and the hot water supplying refrigerant heat transfer pipe are joined to each other by soldering, but so long as the heat transfer pipes may thermally contact each other, a method of fixing the heat transfer pipes by welding or winding the heat transfer pipes to each other with a band may be adopted.

The air conditioning user-side heat exchanger 28 is bi-divided into a first air conditioning user-side division heat exchanger 28a and a second air conditioning user-side division heat exchanger 28b and the first air conditioning user-side division heat exchanger 28a and the second air conditioning user-side division heat exchanger 28b are connected in series by a connection refrigerant pipe 37. The first air conditioning user-side division heat exchanger 28a and the second air conditioning user-side division heat exchanger 28b are installed at a position lower than the intermediate heat exchanger 23 and the air conditioning heat source-side heat exchanger 24 in order to form a head difference. This is to form a natural circulation type cycle of the air conditioning refrigerant to be described below.

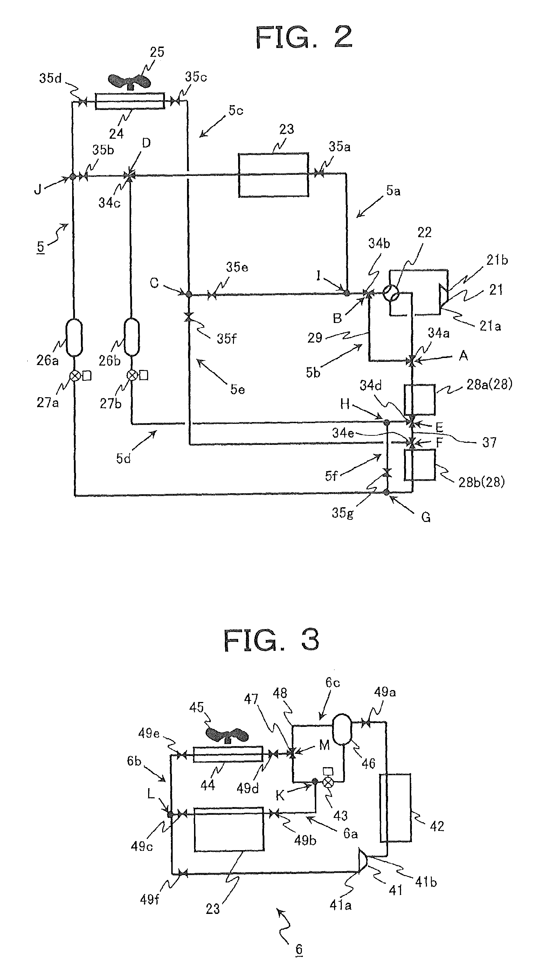

Continuously, a configuration of the air conditioning refrigerant circuit 5 will be described in detail with reference to FIG. 2. The air conditioning refrigerant circuit 5 first includes an air conditioning refrigerant main circuit 5a formed in a loop by connecting a discharge port 21b of the air conditioning compressor 21, the 4-way valve 22, the intermediate heat exchanger 23, the first air conditioning refrigerant tank 26a, the air conditioning expansion valve 27a, the second air conditioning user-side division heat exchanger 28b, the first air conditioning user-side division heat exchanger 28a, the 4-way valve 22, and a suction port 21a of the air conditioning compressor 21 in sequence through the refrigerant pipe.

The air conditioning refrigerant circuit 5 is configured by installing five air conditioning refrigerant branch paths 5b to 5f in the air conditioning refrigerant main circuit 5a.

The first air conditioning refrigerant branch path 5b is an air conditioning refrigerant branch path bypassing the suction port 21a and the discharge port 21b of the air conditioning compressor 21, and in detail, is an air conditioning refrigerant branch path formed by connecting a branch point A positioned between the first air conditioning user-side division heat exchanger 28a and the 4-way valve 22 and a branch point B positioned between the 4-way valve 22 and a branch point I through an air conditioning bypass pipe 29. A 3-way valve 34a and a 3-way valve 34b are installed at the branch point A and the branch point B in the first air conditioning branch circuit 5b, respectively. A flow path on which the air conditioning refrigerant flows is switched to a flow path passing through the air conditioning compressor 21 and a flow path (that is, a flow path passing through the air conditioning bypass pipe 29) passing through the first air conditioning refrigerant branch path 5b, by operating the 3-way valves 34a and 34b. That is, the 3-way valves 34a and 34b correspond to air conditioning bypass opening/closing means of the present invention.

The second air conditioning refrigerant branch path 5c is an air conditioning branch path (in other words, an air conditioning refrigerant branch path passing through the air conditioning heat source-side heat exchanger 24 connected with the intermediate heat exchanger 23 in parallel) bypassing the intermediate heat exchanger 23, and in detail, is an air conditioning refrigerant branch path that is branched from the branch point I positioned between the 4-way valve 22 and the intermediate heat exchanger 23, passes though the air conditioning heat source-side heat exchanger 24, and meets at a branch point J positioned between the intermediate heat exchanger 23 and the first air conditioning refrigerant tank 26a.

The third air conditioning refrigerant branch path 5d is an air conditioning refrigerant branch path that is branched from a branch point D positioned between the intermediate heat exchanger 23 and the branch point J, sequentially passes through the second air conditioning refrigerant tank 26b and the air conditioning auxiliary expansion valve 27b, and meets at a branch point E positioned between the first air conditioning user-side division heat exchanger 28a and the second air conditioning user-side division heat exchanger 28b. A 3-way valve 34c is installed at the branch point D and a 3-way valve 34d is installed at the branch point E.

The fourth air conditioning refrigerant branch path 5e is an air conditioning refrigerant branch path formed by connecting a branch point C positioned between the branch point I and the air conditioning heat source-side heat exchanger 24 (positioned adjacent to the air conditioning compressor 21 from the air conditioning heat source-side heat exchanger 24) and a branch point F positioned between the second air conditioning user-side division heat exchanger 28b and the branch point E through the refrigerant pipe. A 2-way valve 35e is installed between the branch point I and the branch point C, a 2-way valve 35f is installed between the branch point C and the branch point F, and a 3-way valve 34e is installed at the branch point F.

The fifth air conditioning refrigerant branch path 5f is an air conditioning refrigerant branch path that is branched from a branch point G positioned between the air conditioning expansion valve 27a and the second air conditioning user-side division heat exchanger 28b installed in the air conditioning refrigerant main circuit 5a and meets at a branch point H positioned between the air conditioning auxiliary expansion valve 27b installed on the third air conditioning refrigerant branch path 5d and the branch point E. A 2-way valve 35g is installed on the fifth air conditioning refrigerant branch path 5f.

A 2-way valve 35a and a 2-way valve 35b are installed by sandwiching the front and the back of the intermediate heat exchanger 23 and a 2-way valve 35c and a 2-way valve 35d are installed by sandwiching the front and the back of the air conditioning heat source-side heat exchanger 24, in the air conditioning refrigerant circuit 5.

As the air conditioning refrigerant which is circulated in the air conditioning refrigerant circuit 5, for example, R410a, R134a, HFO1234yf, HFO1234ze, and CO2 may be used.

The hot water supplying refrigerant circuit 6 is a circuit where the hot water supplying refrigerant is circulated and is formed in a loop by connecting a hot water supplying compressor 41 compressing hot water supplying refrigerant, a hot water supplying user-side heat exchanger 42 exchanging heat with the hot water supply circuit 9, a hot water supplying refrigerant tank 46 as a buffer controlling the amount of the hot water supplying refrigerant varied by switching the flow path, a hot water supplying expansion valve 43 depressurizing the hot water supplying refrigerant, the intermediate heat exchanger 23, and a hot water supplying heat source-side heat exchanger 44 exchanging heat with the air sent by a fan 45 through the refrigerant pipe. A hot water supplying refrigeration cycle (hot water supply cycle) is formed by the hot water supplying refrigerant circuit 6.

In the hot water supplying compressor 41, the capacity may be controlled by inverter controlling and the rotational speed is varied from a low speed up to a high speed like the air conditioning compressor 21. The hot water supplying user-side heat exchanger 42 is configured so that a hot water supplying refrigerant heat transfer pipe (not illustrated) where the hot water supplying refrigerant flows and a hot water supply water heat transfer pipe (not illustrated) where water of the hot water supply circuit 9 to be described below flows thermally contact each other.

Continuously, a configuration of the hot water supplying refrigerant circuit 6 will be described in detail with reference to FIG. 3. The hot water supplying refrigerant circuit 6 first includes a hot water supplying refrigerant main circuit 6a that is formed in a loop by sequentially connecting a discharge port 41b of the hot water supplying compressor 41, the hot water supplying user-side heat exchanger 42, a hot water supplying refrigerant tank 46, the hot water supplying expansion valve 43, the intermediate heat exchanger 23, and a suction port 41a of the hot water supplying compressor 41 through the refrigerant pipe.

The hot water supplying refrigerant circuit 6 is configured by installing two hot water supplying refrigerant branch paths 6b and 6c on the hot water supplying refrigerant main circuit 6a. The first hot water supplying refrigerant branch path 6b is a hot water supplying refrigerant branch path (in other words, a hot water supplying refrigerant branch path passing through the hot water supplying heat source-side heat exchanger 44 connected with the intermediate heat exchanger 23 in parallel) bypassing the intermediate heat exchanger 23, and in detail, is a hot water supplying refrigerant branch path that is branched from a branch point K positioned between the hot water supplying expansion valve 43 and the intermediate heat exchanger 23, passes though the hot water supplying heat source-side heat exchanger 44, and meets at a branch point L positioned between the intermediate heat exchanger 23 and the suction port 41a of the hot water supplying compressor 41.

The second hot water supplying refrigerant branch path 6c is a hot water supplying refrigerant branch path formed by directly connecting the hot water supplying refrigerant tank 46 positioned between the hot water supplying user-side heat exchanger 42 and the hot water supplying expansion valve 43 and a branch point M positioned between the branch point K of the first hot water supplying refrigerant branch path 6b and an inlet of the hot water supplying heat source-side heat exchanger 44 by means of a hot water supplying bypass pipe 48. A 3-way valve (hot water supplying bypass opening/closing means) 47 is installed at the branch point M. The second hot water supplying refrigerant branch path 6c is opened/closed by operating the 3-way valve 47. When the second hot water supplying refrigerant branch path 6c is opened by the 3-way valve 47, the hot water supplying refrigerant may flow to the hot water supplying refrigerant tank 46 from the hot water supplying heat source-side heat exchanger 44, but when the second hot water supplying refrigerant branch path 6c is closed by the 3-way valve 47, the hot water supplying refrigerant may not flow to the hot water supplying refrigerant tank 46 from the hot water supplying heat source-side heat exchanger 44.

A 2-way valve 49a is installed at a position adjacent to an outlet of the hot water supplying user-side heat exchanger 42, 2-way valves 49b and 49c are installed at positions adjacent to an inlet and an outlet of the intermediate heat exchanger 23, respectively, 2-way valves 49d and 49e are installed at positions adjacent to an inlet and an outlet of the hot water supplying heat source-side heat exchanger 44, respectively, and a 2-way valve 49f is installed at a position between the branch point L and the suction port 41a of the hot water supplying compressor 41.

As the hot water supplying refrigerant which is circulated in the hot water supplying refrigerant circuit 6, for example, R134a, HFO1234yf, HFO1234ze, and CO2 may be used.

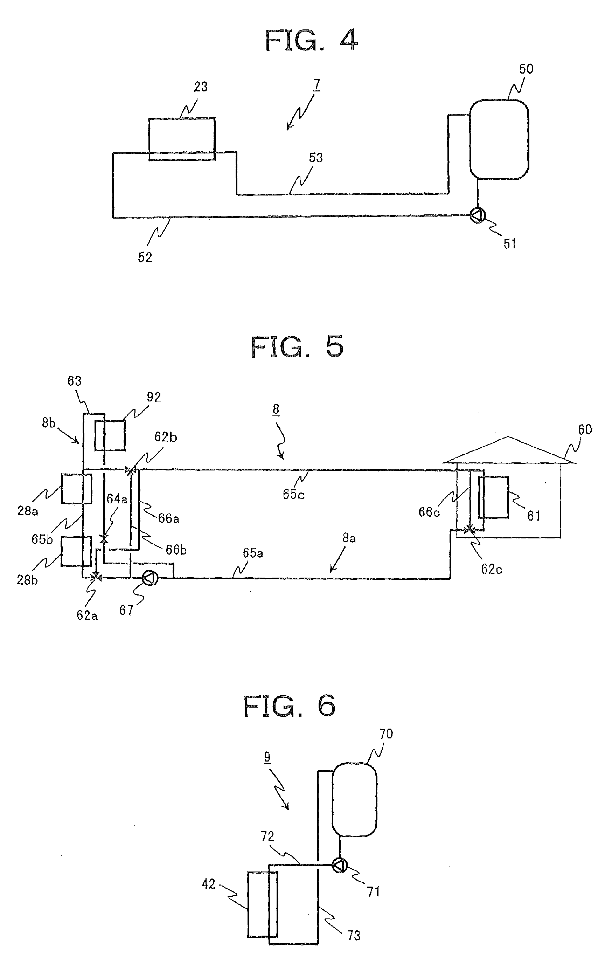

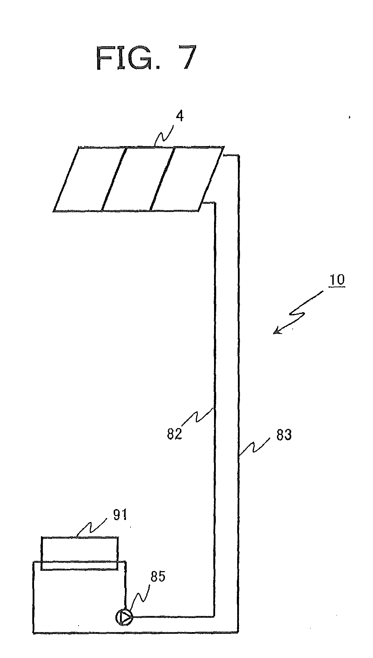

Subsequently, the intermediate hot water circulation circuit (intermediate heat medium circuit) 7 is a circuit which is formed in a loop by connecting a lower portion of a heat storage tank 50 and one end of the intermediate heat exchanger 23 through an intermediate hot water pipe 52 and connecting the other end of the intermediate heat exchanger 23 and the heat storage tank 50 through an intermediate hot water pipe 53, as illustrated in FIG. 4. An intermediate hot water circulation pump 51 is mounted on the intermediate hot water pipe 52. Water (heat transfer medium) in the intermediate hot water circulation circuit 7 flows to the intermediate heat exchanger 23 by driving the intermediate hot water circulation pump 51 and returns to the heat storage tank 50 while performing heat exchange with the air conditioning refrigerant that flows on the air conditioning refrigerant circuit 5 and the hot water supplying refrigerant that flows on the hot water supplying refrigerant circuit 6 by using the intermediate heat exchanger 23, respectively. Since a heat storage material is charged in the heat storage tank 50, heat of relatively high temperature or heat of relatively low temperature acquired from the intermediate heat exchanger 23 is stored in the heat storage tank 50. Water is supplied to the heat storage tank 50 from a tap water supply pipe 76b (see FIG. 7).

Subsequently, the air conditioning cold/hot water circulation circuit (air conditioning heat transfer medium circulation circuit) 8 includes two circuits of an air conditioning cold/hot water main circuit 8a exchanging heat with the air conditioning refrigerant circuit 5 and a cold/hot water branch circuit 8b for hot water supply residual heat that exchanges heat with the hot water supply residual heat hot water circulation circuit 12. The heat transfer medium that flows in the air conditioning cold/hot water circulation circuit 8 is water (cold water or hot water), but in a cold region, brine such as ethylene glycol may be used instead of water.

The air conditioning cold/hot water main circuit 8a is a circuit formed in a loop by sequentially connecting an indoor heat exchanger 61 installed in the housing 60, an air conditioning cold/hot water circulation pump 67, the second air conditioning user-side division heat exchanger 28b, and the first air conditioning user-side division heat exchanger 28a by means of air conditioning cold/hot water pipes 65a, 65b, and 65c, as illustrated in FIG. 5. A first air conditioning cold/hot water branch pipe 66a and a second air conditioning cold/hot water branch pipe 66b are installed in the air conditioning cold/hot water main circuit 8a to cross each other in multi levels (so called a cross shape).

One end of the first air conditioning cold/hot water branch pipe 66a is connected with the air conditioning cold/hot water pipe 65a connecting the indoor heat exchanger 61 and the second air conditioning user-side division heat exchanger 28b through a 3-way valve 62a and the other end thereof is directly connected with the air conditioning cold/hot water pipe 65c without a 3-way valve interposed therebetween. One end of the second air conditioning cold/hot water branch pipe 66b is connected with the air conditioning cold/hot water pipe 65c connecting the indoor heat exchanger 61 and the first air conditioning user-side division heat exchanger 28a through a 3-way valve 62b and the other end thereof is directly connected with the air conditioning cold/hot water pipe 65a without a 3-way valve interposed therebetween. By operating the 3-way valve 62a and the 3-way valve 62b, a flowing direction of water to the air conditioning user-side heat exchangers 28a and 28b may be switched.

A third air conditioning cold/hot water branch pipe 66c for bypassing the indoor heat exchanger 61 is installed. One end of the third air conditioning cold/hot water branch pipe 66c is connected with the air conditioning cold/hot water pipe 65a through a 3-way valve 62c and the other end thereof is directly connected with the air conditioning cold/hot water pipe 65c without a 3-way valve interposed therebetween. A flow ratio of water that flows in the indoor heat exchanger 61 and water that flows in the third air conditioning cold/hot water branch pipe 66c may be adjusted by an opening level of a port of the 3-way valve 62c.

The cold/hot water branch circuit 8b for hot water supply residual heat is a circular circuit formed by connecting an outlet of the first air conditioning user-side division heat exchanger 28a and an inlet of the air conditioning cold/hot water circulation pump 67 through a hot water supply residual heat cold/hot water pipe 63 and joining a hot water supply residual heat exchanger 92 to be described below to the hot water supply residual heat cold/hot water pipe 63. A 2-way valve 64a is mounted at a position between the hot water supply residual heat exchanger 92 and the air conditioning cold/hot water circulation pump 67, in the hot water supply residual heat cold/hot water pipe 63.

In the air conditioning cold/hot water circulation circuit 8 configured as above, when the 2-way valve 64a is closed, water sent from the air conditioning cold/hot water circulation pump 67 is circulated in the air conditioning cold/hot water main circuit 8a. Meanwhile, when the 2-way valve 64a is opened, the water sent from the air conditioning cold/hot water circulation pump 67 is circulated in the hot water supply residual heat cold/hot water branch circuit 8b as well as the air conditioning cold/hot water main circuit 8a. Accordingly, when the 2-way valve 64a is opened, heat of relatively high temperature received from the first air conditioning user-side heat exchanger 28a and the second air conditioning user-side heat exchanger 28b may be transferred to the hot water supply residual heat hot water circulation circuit 12 through the hot water supply residual heat exchanger 92.

In the following description, a term, "cold water" or "hot water" may be used as the water that flows on the air conditioning cold/hot water circulation circuit 8, but it is additionally remarked that the "cold water" is used as a meaning of the water that flows on the air conditioning cold/hot water circulation circuit 8 in cooling and the "hot water" is used as a meaning of the water that flows on the air conditioning cold/hot water circulation circuit 8 in heating.

Subsequently, as illustrated in FIG. 6, the hot water supply circuit 9 is a circuit that is formed in a loop by connecting a lower portion of the hot water storage tank 70 and one end of the hot water supplying user-side heat exchanger 42 through a hot water supplying pipe 72 and connecting the other end of the hot water supplying user-side heat exchanger 42 and an upper portion of the hot water storage tank 70 through a hot water supplying pipe 73. A hot water supplying circulation pump 71 is mounted on the hot water supplying pipe 72. Water in the hot water storage tank 70 flows to the hot water supplying user-side heat exchanger 42 by driving the hot water supplying circulation pump 71 and exchanges heat with the hot water supplying refrigerant to become high-temperature water (hot water) in the hot water supplying user-side heat exchanger 42, and returns to the storage tank 70. Since the heat storage material is charged in the hot water storage tank 70, the heat of relatively high temperature acquired from the hot water supplying user-side heat exchanger 42 is stored in the hot water storage tank 70.

Subsequently, the solar heat circulation circuit 10 is a circuit that is formed in a loop by connecting the solar heat collector 4 and a solar heat exchanger 91 through solar heat pipes 82 and 83. A solar heat circulation pump 85 is mounted on the solar heat pipe 82. Water or brine heated by the solar heat collector 4 is circulated in the solar heat circulation circuit 10 by driving the solar heat circulation pump 85 and exchanges heat with the hot water supply residual heat hot water circulation circuit 12 while flowing on the solar heat exchanger 91. As a result, the solar heat may be transferred to the water that flows on the hot water supply residual heat hot water circulation circuit 12.

Subsequently, a hot water supply path 11 includes three paths of a hot water supply path 11a for supplying high-temperature water (hot water) stored in the hot water storage tank 70 to hot water supply load sides (a bathtub, a kitchen, a washroom, and the like), an intermediate hot water supply path 11b for supplying intermediate hot water stored in the heat storage tank 50 to the hot water supply load sides (the bathtub, the kitchen, the washroom, and the like), and a tap water supply path 11c for supplying tap water to the hot water storage tank 70, the heat storage tank 50, and the hot water supply load sides (the bathtub, the kitchen, the washroom, and the like).

The hot water supply path 11a includes a hot water supply pipe 74a of which one end is connected to the hot water storage tank 70 and the other end is connected to a hot water supply port 79 and a hot water supply pipe 74b of which one end is connected to the hot water storage tank 70 and the other end is connected to the midstream of the hot water supply pipe 74a, and has a configuration in which a 3-way valve 77a is installed at a portion where the hot water supply pipe 74a and the hot water supply pipe 74b meet. A hot water supply pump (not illustrated) is installed between the hot water supply port 79 and a 3-way valve 77c to be described below.

The intermediate hot water supply path 11b is configured to include an intermediate hot water supply pipe 75a of which one end is connected to the heat storage tank 50 and the other end is connected to the midstream of the hot water supply pipe 74a and an intermediate hot water supply pipe 75b of which one end is connected to the heat storage tank 50 and the other end is connected to the midstream of the intermediate hot water supply pipe 75a. A 3-way valve 77d is installed at a portion where the intermediate hot water supply pipe 75a and the intermediate hot water supply pipe 75b meet and a 3-way valve 77b is installed at a portion where the intermediate hot water supply pipe 75a and the hot water supply pipe 74a meet.

The tap water supply path 11c includes a tap water supply pipe 76a connected from the tap water supply port 78, from which the tap water is supplied, to the hot water storage tank 70, a tap water supply pipe 76b branched from the midstream of the tap water supply pipe 76a and connected to the heat storage tank 50, and a tap water supply pipe 76c branched from the midstream of the tap water supply pipe 76a and connected to the midstream of the hot water supply pipe 74a, and has a configuration in which the 3-way valve 77c is installed at a portion where the tap water supply pipe 76c and the hot water supply pipe 74a meet.

According to the hot water supply path 11 configured as above, the hot water supply pump (not illustrated) is actuated and the 3-way valves 77a, 77b, and 77c are appropriately opened/closed such that tap water, the intermediate hot water stored in the heat storage tank 50 and the high-temperature water stored in the hot water storage tank 70 may be supplied from the hot water supply port 79 to the hot water supply load sides, respectively, and further, at least two kinds of water of the tap water, the intermediate hot water, and the high-temperature water in a mixed state may be supplied from the hot water supply port 79 to the hot water supply load sides, by adjusting an opening level of each port of the 3-way valves 77a, 77b, and 77c. That is, the 3-way valves 77a, 77b, and 77c have a temperature control function to control a hot water supply temperature.

Subsequently, the hot water supply residual heat hot water circulation circuit 12 is a circuit that is formed in a loop by connecting the lower portion of the heat storage tank 50 and one end of the solar heat exchanger 91 through a hot water supply residual heat hot water pipe 94, connecting the other end of the solar heat exchanger 91 and one end of the hot water supply residual heat exchanger 92 through a hot water supply residual heat hot water pipe 95, and connecting the other end of the hot water supply residual heat exchanger 92 and the upper portion of the heat storage tank 50 through a hot water supply residual heat hot water pipe 96. A hot water supply residual heat hot water circulation pump 93 is mounted on the hot water supply residual heat hot water pipe 94. The water in the heat storage tank 50 receives the heat of relatively high temperature from the solar heat circulation circuit 10 through the solar heat exchanger 91 by driving the hot water supply residual heat hot water circulation pump 93 and returns to the heat storage tank 50 by receiving the heat of relatively high temperature from the hot water supply residual heat cold/hot water branch circuit 8b through the hot water supply residual heat exchanger 92. Therefore, the water stored in the heat storage tank 50 may be heated by solar heat or air conditioning exhaust heat while flowing in the hot water supply residual heat hot water circulation circuit 12.

Although not illustrated, a temperature sensor or a flow rate sensor is appropriately installed in each of the circuits 5 to 12 constituting the air conditioning hot water supply system. A detection signal of the temperature sensor or the flow sensor is introduced into a control device 1a installed in the heat pump unit 1. The control device 1a inputs an operation signal of a remote controller not illustrated and signals of each temperature sensor and each flow sensor and controls operations of various devices (the compressor, the pump, the fan, the expansion valve, the 4-way valve, the 3-way valve, the 2-way valve, and the like) mounted on the respective circuits 5 to 12 based on the signals.

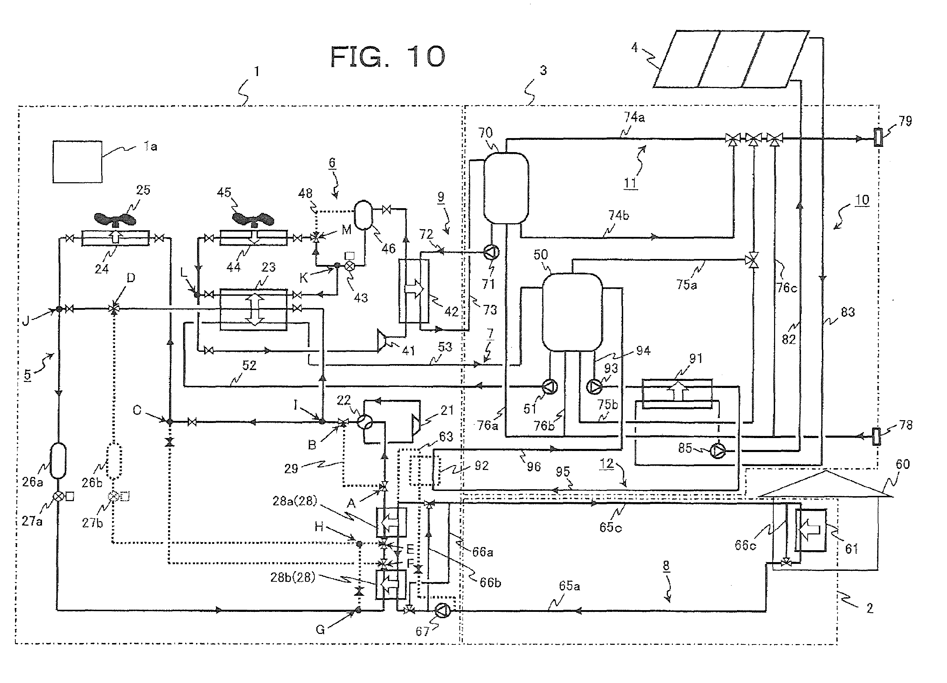

Continuously, various operation modes performed by the air conditioning hot water supply system will be described with reference to FIGS. 10 to 16. Herein, in FIGS. 10 to 15, an arrow given to each heat exchanger indicates the flow of heat and an arrow given to each of the circuits 5 to 12 indicates a direction in which the fluid flows on each circuit. A white 2-way valve is opened and a black 2-way valve is closed. All of three ports in a white 3-way valve are opened, and in a 3-way valve in which two of three ports remain white and one port is black, the white ports are opened and the black port is closed. An arc-shaped solid line drawn in the 4-way valve indicates a flow path of a fluid that flows on the 4-way valve. A path marked with a dotted line in each of the circuits 5 to 12 indicates a path not used in an operation pattern illustrated in the figure, that is, a closed path.

### "Operation pattern No. 1 <Cooling/hot water supplying operation)>" (see FIG. 10)

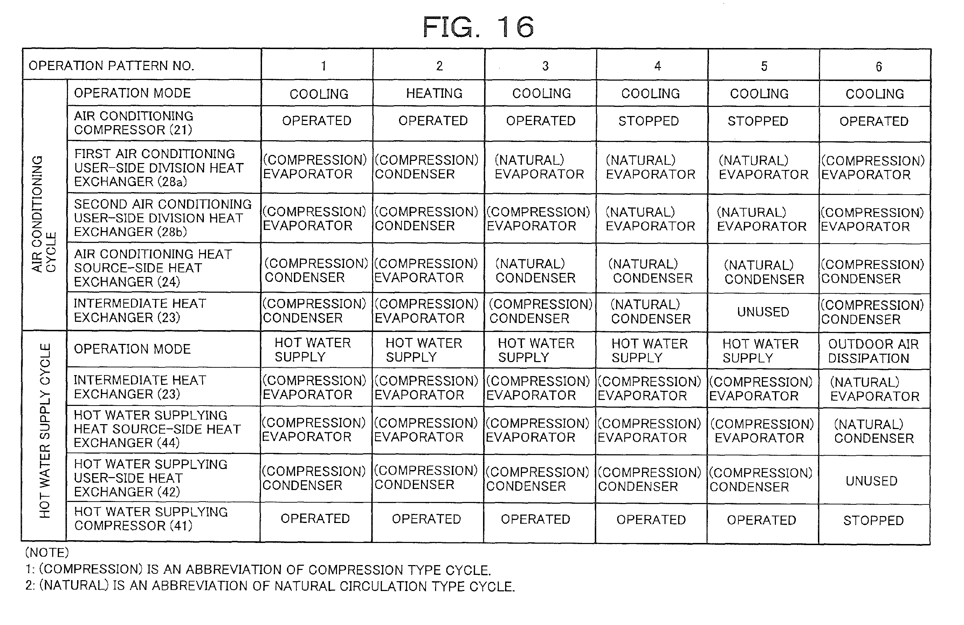

Operation pattern No. 1 is an operation pattern in which the cooling operation by the air conditioning refrigerant circuit 5 and the hot water supply operation by the hot water supplying refrigerant circuit 6 are performed, respectively. In detail, Operation pattern No. 1 is an operation pattern in which, at an air conditioning cycle side, an operation mode is cooling, the air conditioning compressor 21 is operated, the first air conditioning user-side division heat exchanger 28a and the second air conditioning user-side heat exchanger 28b are used as evaporators, and the air conditioning heat source-side heat exchanger 24 and the intermediate heat exchanger 23 are used as condensers, as illustrated in a column of "Operation pattern No. 1" of FIG. 16. Meanwhile, Operation pattern No. 1 is an operation pattern in which, at a hot water supply cycle side, the operation mode is hot water supply, the hot water supplying compressor 1 is operated, the intermediate heat exchanger 23 and the hot water supplying heat source-side heat exchanger 44 are used as the evaporators, and the hot water supplying user-side heat exchanger 42 is used as the condenser.

In the air conditioning refrigerant circuit 5, high-temperature and high-pressure gas refrigerant discharged from the discharge port 21b of the air conditioning compressor 21 flows dividedly into the intermediate heat exchanger 23 and the air conditioning heat source-side heat exchanger 24 through the 4-way valve 22. The high-temperature and high-pressure gas refrigerant that flows into the intermediate heat exchanger 23 dissipates heat to each of the hot water supplying refrigerant that flows on the hot water supplying circuit 6 and the water that flows on the intermediate hot water circulation circuit 7 to be condensed and liquefied. The high-temperature and high-pressure gas refrigerant that flows into the air conditioning heat source-side heat exchanger 24 dissipates heat to the air to be condensed and liquefied. High-pressure liquid refrigerant that meets at the branch point J flows into the first air conditioning refrigerant tank 26a and thereafter, is depressurized and expanded by the air conditioning expansion valve 27a of which an opening level is adjusted as a predetermined opening level, and becomes low-temperature and low-pressure vapor-liquid two-phase refrigerant. The vapor-liquid two-phase refrigerant flows into the second air conditioning user-side division heat exchanger 28b and the first air conditioning user-side division heat exchanger 28b in sequence. The vapor-liquid two-phase refrigerant that flows in the second air conditioning user-side division heat exchanger 28b and the first air conditioning user-side division heat exchanger 28a absorbs heat from cold water having rising temperature, which flows in the air conditioning cold/hot water circulation circuit 8, to be evaporated and becomes low-pressure gas refrigerant. The low-pressure gas refrigerant flows into the suction port 21a of the air conditioning compressor 21 through the 4-way valve 22 and is compressed by the air conditioning compressor 21 again to become the high-temperature and high-pressure gas refrigerant.

In the air conditioning cold/hot water circulation circuit 8, cold water that dissipates heat to the air conditioning refrigerant that flows in the first air conditioning user-side division heat exchanger 28a and the second air conditioning user-side division heat exchanger 28b flows into the indoor heat exchanger 61 while flowing in the air conditioning cold/hot water main circuit 8a by driving the air conditioning cold/hot water circulation pump 67. In the indoor heat exchanger 61, the cold water in the air conditioning cold/hot water main circuit 8a exchanges heat with high-temperature air in the housing 60, and the air in the housing 60 is cooled. That is, an indoor part of the housing 60 is cooled. In this case, the cold water that flows on the indoor heat exchanger 61 absorbs heat from the air in the housing 60 to rise in temperature thereof. The temperature-rising cold water is circulated in the air conditioning cold/hot water main circuit 8a by the air conditioning cold/hot water circulation pump 67 and cooled by exchanging heat with the air conditioning refrigerant circuit 5 while flowing between the first air conditioning user-side division heat exchanger 28a and the second air conditioning user-side division heat exchanger 28b again.

Meanwhile, in the hot water supplying refrigerant circuit 6, gas refrigerant compressed and subjected to the high temperature and the high pressure by the hot water supplying compressor 41 flows into the hot water supplying user-side heat exchanger 42. The high-temperature and high-pressure gas refrigerant that flows in the hot water supplying user-side heat exchanger 42 dissipates heat to the water that flows in the hot water supply circuit 9 to be condensed and liquefied. The liquefied high-pressure refrigerant flows into the hot water supplying refrigerant tank 46 and thereafter, is depressurized and expanded by the hot water supplying expansion valve 43 of which the opening level is controlled at a predetermined opening level, and becomes low-temperature and low-pressure vapor-liquid two-phase refrigerant. The vapor-liquid two-phase refrigerant flows dividedly into the hot water supplying heat source-side heat exchanger 44 and the intermediate heat exchanger 23. The vapor-liquid two-phase refrigerant that flows into the hot water supplying heat source-side heat exchanger 44 absorbs heat from the air to be evaporated and becomes low-pressure gas refrigerant. The vapor-liquid two-phase refrigerant that flows on the intermediate heat exchanger 23 absorbs heat from the air conditioning refrigerant that flows on the air conditioning refrigerant circuit 5 to be evaporated and becomes the low-pressure gas refrigerant. The low-pressure gas refrigerant discharged from the hot water supplying heat source-side heat exchanger 44 and the low-pressure gas refrigerant discharged from the intermediate heat exchanger 23 meet at the branch point L and thereafter, flow into the suction port 41a of the hot water supplying compressor 41 and are compressed again by the hot water supplying compressor 41 to become the high-temperature and high-pressure gas refrigerant.

In the intermediate hot water circulation circuit 7, the water stored in the heat storage tank 50 is transported to the intermediate heat exchanger 23 by the intermediate hot water circulation pump 51, and absorbs heat of relatively high temperature from the air conditioning refrigerant that flows on the air conditioning refrigerant circuit 5, while flowing on the intermediate heat exchanger 23. As a result, the water becomes intermediate-temperature water (lukewarm water) by the intermediate heat exchanger 23. The absorbed heat of relatively high temperature is stored in the heat storage tank 50.

In the hot water supply circuit 9, the water stored in the hot water storage tank 70 is transported to the hot water supplying user-side heat exchanger 42 by the hot water supplying circulation pump 71, and absorbs heat of relatively high temperature from the hot water supplying refrigerant that flows on the hot water supplying refrigerant circuit 6, while flowing on the hot water supplying user-side heat exchanger 42. As a result, the water becomes water having a temperature higher than the intermediate temperature by the hot water supplying user-side heat exchanger 42. That is, the water circulated in the hot water supply circuit 9 has a temperature higher than that of the water circulated in the intermediate hot water circulation circuit 7.

In the solar heat circulation circuit 10, water receiving the solar heat collected by the solar heat collector 4 is transported to the solar heat exchanger 91 by the solar heat circulation pump 85. The solar heat stored in the water dissipates heat to the water that flows on the hot water supply residual heat hot water circulation circuit 12 through the solar heat exchanger 91. Therefore, the water that flows on the hot water supply residual heat hot water circulation circuit 12 is heated by the solar heat circulation circuit 10.

In the hot water supply path 11, water having a predetermined temperature, which is acquired by operating the air conditioning hot water supply system is supplied to the hot water supply load sides according to a demand from the hot water supply load sides.

In the hot water supply residual heat hot water circulation circuit 12, the water stored in the heat storage tank 50 is transported to the solar heat exchanger 91 by the hot water supply residual heat hot water circulation pump 93, and absorbs heat of relatively high temperature from the water that flows on the solar heat circulation circuit 10, while flowing on the solar heat exchanger 91. In the hot water supply residual heat hot water circulation circuit 12, water is heated by using the solar heat which is regenerative energy. The acquired heat of relatively high temperature is stored in the heat storage tank 50. In Operation pattern No. 1, heat exchange by the hot water supply residual heat exchanger 92 is not performed.

An operation by Operation pattern No. 1 may be performed, for example, when the temperature of outdoor air is high, and the hot water supply load and the air conditioning load are present like the daytime of summer, and particularly, when the air conditioning load is large. In Operation pattern No. 1, the following controls are preferably performed by the control device 1a.
(a) Operating/stopping of the hot water supplying compressor 41 is controlled to be switched according to a heat storage amount of the hot water storage tank 70.
(b) By opening/closing the 2-way valves 49b, 49c, 49d, and 49e according to a situation such as a balance of an exchanged heat amount, switching is controlled like using the intermediate heat exchanger 23 and the hot water supplying heat source-side heat exchanger 44 simultaneously or using the heat exchangers independently.
(c) Running/stopping of the air conditioning compressor 21 is controlled to be switched according to the return temperature (an inlet temperature of the second air conditioning user-side division heat exchanger 28b or an outlet temperature of the air conditioning cold/hot water circulation pump 67) of the water that is circulated in the air conditioning cold/hot water circulation circuit 8.
(d) By opening/closing the 2-way valves 35a, 35b, 35c, and 35d according to a situation such as a balance of an exchanged heat amount, switching is controlled like using the intermediate heat exchanger 23 and the air conditioning heat source-side heat exchanger 24 simultaneously or using the heat exchangers independently.

Herein, when an air conditioning cycle and a hot water supply cycle are operated simultaneously, dissipated heat of the air conditioning cycle in the intermediate heat exchanger 23 is used as an absorbed heat source of the hot water supply cycle and when an absorbed heat amount of the hot water supply cycle is short, the hot water supplying heat source-side heat exchanger 44 of the hot water supply cycle side may be used concurrently. When a dissipated heat amount of the air conditioning cycle is short, the air conditioning heat source-side heat exchanger 24 of the air conditioning cycle side is used concurrently or when the temperature of a medium (the temperature of water) in the heat storage tank 50 is low like a case in which the amount of solar radiation is small, a heat storage operation of dissipating heat to the water that flows on the air conditioning cold/hot water circulation circuit 7 may be performed from the air conditioning cycle through the intermediate heat exchanger 23.

When a predetermined amount or more of the stored heat amount is in the hot water storage tank 70 and only the air conditioning cycle is operated even though a cooling load is present from evening to night only the air conditioning heat source-side heat exchanger 24 of the air conditioning cycle may be used as the condenser without using the intermediate heat exchanger 23, and when the temperature of the water in the heat storage tank is low like the case in which the amount of solar radiation is small, the heat storage operation of dissipating heat to the water that flows on the air conditioning cold/hot water circulation circuit 7 may be performed from the air conditioning cycle through the intermediate heat exchanger 23.

According to Operation pattern No. 1, exhaust heat of the air conditioning cycle is used as a heat source of the hot water supply cycle, and thus an evaporation temperature of hot water supply cycle is increased and/or a condensation temperature of the air conditioning cycle is decreased to thereby reduce power consumption of the hot water supply cycle and/or power consumption of the air conditioning cycle, and efficiency of the air conditioning hot water supply system may be improved.

In general, hot water of which the temperature rises to approximately 65°C is mixed with water such as the tap water to provide water (hot water) having a predetermined temperature to the hot water supply load side by operating hot water supplying by using the hot water supplying refrigerant circuit 6, but in Operation pattern No. 1, the temperature may be controlled by using the intermediate-temperature water in the heat storage tank 50 storing the exhaust heat of the air conditioning cycle (the water in the heat storage tank 50 has a temperature higher than that of the tap water, but lower than the temperature of the hot water supply), instead of mixing the tap water. Therefore, according to Operation pattern No. 1, the usage amount of the temperature rising hot water may be reduced through the hot water supplying refrigerant circuit 6, and further, an operation time of the hot water supply cycle may be shortened while little increasing power consumption in the cooling operation, and the power consumption may be reduced.

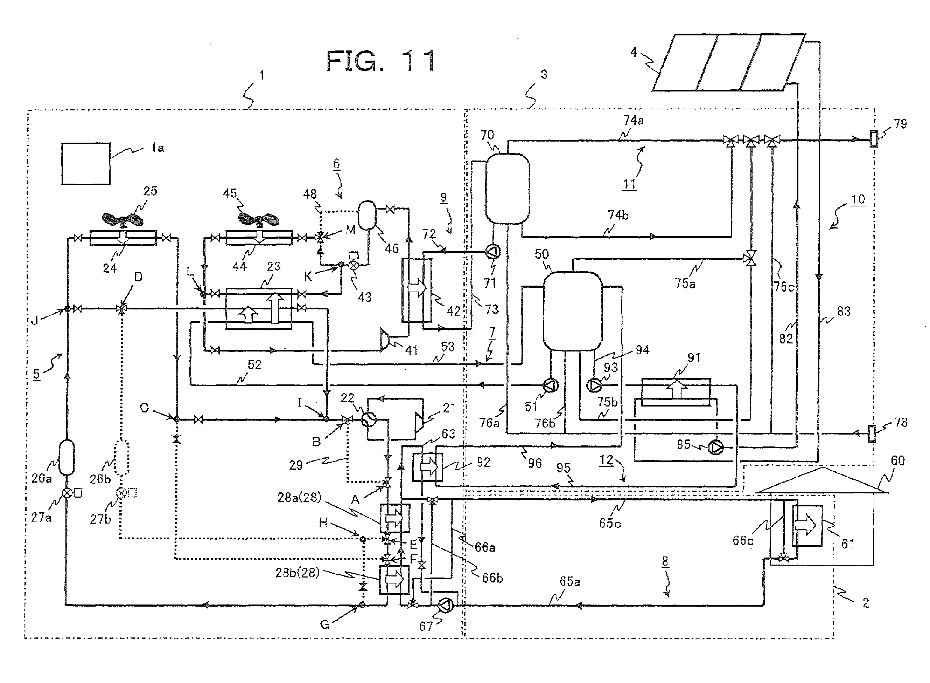

### "Operation pattern No. 2 <Heating/hot water supplying operation)>" (see FIG. 11)

Operation pattern No. 2 is an operation pattern in which the heating operation by the air conditioning refrigerant circuit 5 and the hot water supply operation by the hot water supplying refrigerant circuit 6 are performed, respectively. In detail, Operation pattern No. 2 is an operation pattern in which, at the air conditioning cycle side, an operation mode is heating, the air conditioning compressor 21 is operated, the first air conditioning user-side division heat exchanger 28a and the second air conditioning user-side heat exchanger 28b are used as the condensers, and the air conditioning heat source-side heat exchanger 24 and the intermediate heat exchanger 23 are used as the evaporators, as illustrated in a column of "Operation pattern No. 2" of FIG. 16. Meanwhile, Operation pattern No. 2 is an operation pattern in which, at the hot water supply cycle side, the operation mode is the hot water supply, the hot water supplying compressor 1 is operated, the intermediate heat exchanger 23 and the hot water supplying heat source-side heat exchanger 44 are used as the evaporators, and the hot water supplying user-side heat exchanger 42 is used as the condenser.

In the air conditioning refrigerant circuit 5, the high-temperature and high-pressure gas refrigerant discharged from the discharge port 21b of the air conditioning compressor 21 flows into the first air conditioning user-side division heat exchanger 28a and the second air conditioning user-side division heat exchanger 28b through the 4-way valve 22. The high-temperature and high-pressure gas refrigerant that flow on the first air conditioning user-side division heat exchanger 28a and the second air conditioning user-side division heat exchanger 28b dissipates heat to water (cold water) that flows in the air conditioning cold/hot water circulation circuit 8 to be condensed and liquefied. The high-pressure liquid refrigerant is depressurized and expanded by the air conditioning expansion valve 27a of which the opening level is controlled at a predetermined opening level to be the low-temperature and low-pressure vapor-liquid two-phase refrigerant and flows on the first air conditioning refrigerant tank 26a to flow dividedly into the intermediate heat exchanger 23 and the air conditioning heat source-side heat exchanger 24. The vapor-liquid two-phase refrigerant that flows into the air conditioning heat source-side heat exchanger 24 absorbs heat from the air to be evaporated and becomes the low-pressure gas refrigerant. Meanwhile, the vapor-liquid two-phase refrigerant that flows into the intermediate heat exchanger 23 absorbs heat from the water (the intermediate-temperature water, that is, lukewarm water) that flows on the intermediate hot water circulation circuit 7 to be evaporated and becomes the low-pressure gas refrigerant. The low-pressure gas refrigerant that meets at the branch point I flows into the suction port 21a of the air conditioning compressor 21 through the 4-way valve 22 and is compressed by the air conditioning compressor 21 again to become the high-temperature and high-pressure gas refrigerant.

In the air conditioning cold/hot water circulation circuit 8, the hot water that absorbs heat from the air conditioning refrigerant that flows on the first air conditioning user-side division heat exchanger 28a and the second air conditioning user-side division heat exchanger 28b flows into the indoor heat exchanger 61 while flowing in the air conditioning cold/hot water main circuit 8a by driving the air conditioning cold/hot water circulation pump 67. In the indoor heat exchanger 61, the hot water in the air conditioning cold/hot water main circuit 8a exchanges heat with low-temperature air in the housing 60, and the air in the housing 60 is heated. That is, an indoor part of the housing 60 is heated. In this case, the hot water that flows on the indoor heat exchanger 61 dissipates heat to the air in the housing 60 to be cooled. The cooled hot water is circulated in the air conditioning cold/hot water main circuit 8a by the air conditioning cold/hot water circulation pump 67 and to rise in temperature thereof by exchanging heat with the air conditioning refrigerant circuit 5 while flowing between the first air conditioning user-side division heat exchanger 28a and the second air conditioning user-side division heat exchanger 28b again.

In Operation pattern No. 2, since the 2-way valve 64a is opened, the hot water that absorbs heat from the first air conditioning user-side division heat exchanger 28a and the second air conditioning user-side division heat exchanger 28b is circulated in the hot water supply residual heat cold/hot water branch circuit 8b. That is, water sent from the air conditioning cold/hot water circulation pump 67 becomes hot water by the first air conditioning user-side division heat exchanger 28a and the second air conditioning user-side division heat exchanger 28b, and flows into the hot water supply residual heat exchanger 92 while flowing in the hot water supply residual heat cold/hot water pipe 63. The heat of relatively high temperature acquired from the first air conditioning user-side division heat exchanger 28a and the second air conditioning user-side division heat exchanger 28b is discharged to the water that flows in the hot water supply residual heat hot water circulation circuit 12, in the hot water supply residual heat exchanger 92. Water that is cooled by dissipating heat to the hot water supply residual heat hot water circulation circuit 12 is sent again to the first air conditioning user-side division heat exchanger 28a and the second air conditioning user-side division heat exchanger 28b by the air conditioning cold/hot water circulation pump 67 and acquires heat of relatively high temperature.

Meanwhile, in the hot water supplying refrigerant circuit 6, gas refrigerant compressed and subjected to the high temperature and the high pressure by the hot water supplying compressor 41 flows into the hot water supplying user-side heat exchanger 42. The high-temperature and high-pressure gas refrigerant that flows in the hot water supplying user-side heat exchanger 42 dissipates heat to the water that flows in the hot water supply circuit 9 to be condensed and liquefied. The liquefied high-pressure refrigerant flows into the hot water supplying refrigerant tank 46 and thereafter, is depressurized and expanded by the hot water supplying expansion valve 43 of which the opening level is controlled at a predetermined opening level, and becomes low-temperature and low-pressure vapor-liquid two-phase refrigerant. The vapor-liquid two-phase refrigerant flows dividedly into the hot water supplying heat source-side heat exchanger 44 and the intermediate heat exchanger 23. The vapor-liquid two-phase refrigerant that flows on the hot water supplying heat source-side heat exchanger 44 absorbs heat from the air to be evaporated and becomes low-pressure gas refrigerant. The vapor-liquid two-phase refrigerant that flows on the intermediate heat exchanger 23 absorbs heat from the intermediate hot water (lukewarm water) that flows on the intermediate hot water circulation circuit 7 to be evaporated and becomes the low-pressure gas refrigerant. The low-pressure gas refrigerant discharged from the hot water supplying heat source-side heat exchanger 44 and the low-pressure gas refrigerant discharged from the intermediate heat exchanger 23 meet at the branch point L and thereafter, flow into the suction port 41a of the hot water supplying compressor 41 and are compressed again by the hot water supplying compressor 41 to become the high-temperature and high-pressure gas refrigerant.

In the intermediate hot water circulation circuit 7, intermediate-temperature water stored in the heat storage tank 50 is transported to the intermediate heat exchanger 23 by the intermediate hot water circulation pump 51. The intermediate-temperature water discharges heat of relatively high temperature to the air conditioning refrigerant that flows on the air conditioning refrigerant circuit 5 through the intermediate heat exchanger 23 and further, discharges heat of relatively high temperature to the hot water supplying refrigerant that flows on the hot water supplying refrigerant circuit 6. That is, in Operation pattern No. 2, since the intermediate heat exchanger 23 is used as the evaporator, the heat of relatively high temperature stored in the heat storage tank 50 is used. Herein, the heat of relatively high temperature stored in the heat storage tank 50 is acquired from the hot water supply residual heat hot water circulation circuit 12. In detail, in the hot water supply residual heat hot water circulation circuit 12, since the heat of relatively high temperature may be acquired from the hot water supply residual heat exchanger 92 and the solar heat exchanger 91 as described below, the heat of relatively high temperature is stored in the heat storage tank 50, such that the intermediate-temperature water is stored in the heat storage tank 50. The intermediate-temperature water is circulated in the intermediate hot water circulation circuit 7, such that the intermediate heat exchanger 23 may serve as the evaporator.

In the hot water supply circuit 9, the water stored in the hot water storage tank 70 is transported to the hot water supplying user-side heat exchanger 42 by the hot water supplying circulation pump 71, and absorbs heat of relatively high temperature from the hot water supplying refrigerant that flows on the hot water supplying refrigerant circuit 6, while flowing on the hot water supplying user-side heat exchanger 42. As a result, the water becomes water having a temperature higher than the intermediate temperature by the hot water supplying user-side heat exchanger 42. That is, the water circulated in the hot water supply circuit 9 has a temperature higher than that of the water circulated in the intermediate hot water circulation circuit 7.

In the solar heat circulation circuit 10, water receiving the solar heat collected by the solar heat collector 4 is transported to the solar heat exchanger 91 by the solar heat circulation pump 85. The solar heat stored in the water dissipates heat to the water that flows on the hot water supply residual heat hot water circulation circuit 12 through the solar heat exchanger 91. Therefore, the water that flows on the hot water supply residual heat hot water circulation circuit 12 is heated by the solar heat circulation circuit 10.

In the hot water supply path 11, water having a predetermined temperature, which is acquired by operating the air conditioning hot water supply system, is supplied to the hot water supply load sides according to a demand from the hot water supply load sides.

In the hot water supply residual heat hot water circulation circuit 12, the water stored in the heat storage tank 50 is transported to the solar heat exchanger 91 by the hot water supply residual heat hot water circulation pump 93, and absorbs heat of relatively high temperature from the water (intermediate-temperature water) that flows on the solar heat circulation circuit 10, while flowing on the solar heat exchanger 91. That is, in the hot water supply residual heat hot water circulation circuit 12, water is heated by using the solar heat which is regenerative energy. The water that flows in the hot water supply residual heat hot water circulation circuit 12 absorbs heat of relatively high temperature from the water (intermediate-temperature water) that is circulated in the hot water supply residual heat cold/hot water branch circuit 8b through the hot water supply residual heat exchanger 92. That is, in the hot water supply residual heat hot water circulation circuit 12, even heat of relatively high temperature generated when the heating operation is performed by the air conditioning refrigerant circuit 5 is used in order to generate the intermediate-temperature water. The intermediate-temperature water generated as above returns to the heat storage tank 50 and is heat-stored by the heat storage tank 50.

The operation by Operation pattern No. 2 may be performed, for example, when the temperature of the outdoor air is low and the heating load and the hot water supply load are present, in winter. In Operation pattern No. 2, the following controls are preferably performed by the control device 1a.
(a) Running/stopping of the hot water supplying compressor 41 is controlled to be switched according to a heat storage amount of the hot water storage tank 70.
(b) Running/stopping of the air conditioning compressor 21 is controlled to be switched according to the return temperature (an inlet temperature of the second air conditioning user-side division heat exchanger 28b or an outlet temperature of the air conditioning cold/hot water circulation pump 67) of the water that is circulated in the air conditioning cold/hot water circulation circuit 8.

According to Operation pattern No. 2, the outdoor air is used as the heat source from the air conditioning heat source-side heat exchanger 24 and the hot water supplying heat source-side heat exchanger 44, such that the hot water supply cycle and the air conditioning cycle in the related art may be operated. Since heat of relatively high temperature acquired from a higher-temperature heat source than outdoor air such as the solar heat or exhaust heat of an apparatus may dissipate heat to the air conditioning refrigerant circuit 5 and the hot water supplying refrigerant circuit 6 through the intermediate heat exchanger 23, the efficiency of the air conditioning hot water supply system may be improved.

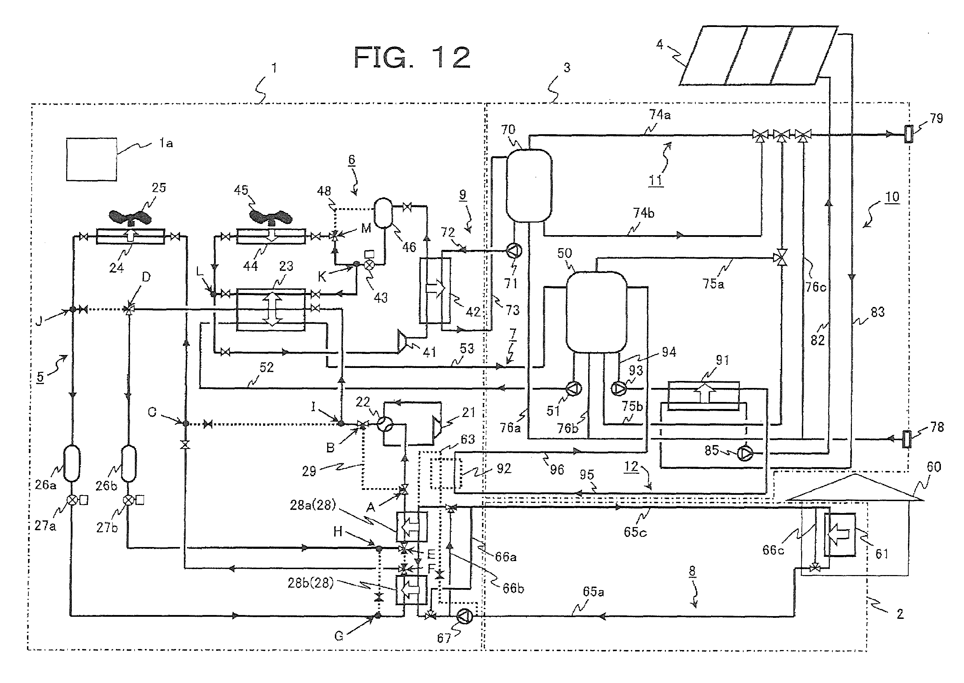

### "Operation pattern No. 3 <Cooling and natural circulation used concurrently/hot water supplying operation)>" (see FIG. 12)

Operation pattern No. 3 is an operation pattern in which the cooling operation by the air conditioning refrigerant circuit 5 and the hot water supply operation by the hot water supplying refrigerant circuit 6 are performed, respectively, and particularly, is an operation mode in which the cooling operation by the air conditioning refrigerant circuit 5 is performed by the natural circulation type cycle and a vapor compression cycle. In detail, Operation pattern No. 3 is an operation pattern in which, at the air conditioning cycle side, the operation mode is cooling, the air conditioning compressor 21 is operated, the first air conditioning user-side division heat exchanger 28a is used as the evaporator in the natural circulation type cycle, the second air conditioning user-side heat exchanger 28b is used as the evaporator in the vapor compression cycle, the air conditioning heat source-side heat exchanger 24 is used as the condenser in the natural circulation type cycle, and the intermediate heat exchanger 23 is used as the condenser in the vapor compression cycle, as illustrated in a column of "Operation pattern No. 3" of FIG. 16. Meanwhile, Operation pattern No. 3 is an operation pattern in which, at the hot water supply cycle side, the operation mode is the hot water supply, the hot water supplying compressor 1 is operated, the intermediate heat exchanger 23 and the hot water supplying heat source-side heat exchanger 44 are used as the evaporators, and the hot water supplying user-side heat exchanger 42 is used as the condenser.

The air conditioning refrigerant circuit 5 has a significant feature in that two paths where the air conditioning refrigerant is circulated are independently formed, as illustrated in FIG. 12. In a first path of Operation pattern No. 3, the air conditioning refrigerant flows in sequence on the discharge port 21b of the air conditioning compressor 21, the 4-way valve 22, the branch point B, the branch point I, the intermediate heat exchanger 23, the branch point D, the second air conditioning refrigerant tank 26b, the air conditioning auxiliary expansion valve 27b, the branch point H, the branch point E, the first air conditioning user-side division heat exchanger 28a, the branch point A, the 4-way valve 22, and the suction port 21a of the air conditioning compressor 21. In a second path of Operation pattern No. 3, the air conditioning refrigerant flows in sequence on the air conditioning heat source-side heat exchanger 24, the branch point J, the first air conditioning refrigerant tank 26a, the air conditioning expansion valve 27a, the branch point G, the second air conditioning user-side heat exchanger 28b, the branch point F, the branch point c, and the air conditioning heat source-side heat exchanger 24. Herein, the vapor compression cycle by the air conditioning compressor 21 is formed in the first path and the natural circulation type cycle where the air conditioning refrigerant is naturally circulated is formed in the second path.

First, in the first path, the high-temperature and high-pressure gas refrigerant discharged from the discharge port 21b of the air conditioning compressor 21 flows into the intermediate heat exchanger 23 through the 4-way valve 22. The high-temperature and high-pressure gas refrigerant that flows into the intermediate heat exchanger 23 dissipates heat to each of the hot water supplying refrigerant that flows on the hot water supplying circuit 6 and the water that flows on the intermediate hot water circulation circuit 7 to be condensed and liquefied. The liquefied high-pressure refrigerant flows into the second air conditioning refrigerant tank 26b and thereafter, is depressurized and expanded by the air conditioning auxiliary expansion valve 27b of which an opening level is adjusted as a predetermined opening level, and becomes low-temperature and low-pressure vapor-liquid two-phase refrigerant. The vapor-liquid two-phase refrigerant flows into the first air conditioning user-side division heat exchanger 28a. The vapor-liquid two-phase refrigerant that flows in the first air conditioning user-side division heat exchanger 28a absorbs heat from the water (lukewarm water) that flows in the air conditioning cold/hot water circulation circuit 8 to be evaporated and becomes low-pressure gas refrigerant. The low-pressure gas refrigerant flows into the suction port 21a of the air conditioning compressor 21 through the 4-way valve 22 and is compressed by the air conditioning compressor 21 again to become the high-temperature and high-pressure gas refrigerant. As such, in the first path, the vapor compression cycle in which the air conditioning refrigerant is forcibly circulated by the air conditioning compressor 21 is formed.

Contrary to this, in the second path, the air conditioning refrigerant that stays in the air conditioning heat source-side heat exchanger 24 dissipates heat to the air to be condensed and liquefied. The liquid refrigerant having high density descends due to an influence of gravity, enters the first air conditioning refrigerant tank 26a, and flows into the second air conditioning user-side division heat exchanger 28b through the air conditioning expansion valve 27a. The liquid refrigerant absorbs heat from the temperature-rising cold water circulated in the air conditioning cold/hot water circulation circuit 8 to be evaporated and become gaseous, while flowing in the second air conditioning user-side division heat exchanger 28b. In this case, since a pressure gradient may be formed due to the difference in density of the refrigerant, the evaporated refrigerant flows toward the air conditioning heat source-side heat exchanger 24. As such, in the second path, the natural circulation cycle in which the air conditioning refrigerant is naturally circulated is formed.

In the air conditioning cold/hot water circulation circuit 8, cold water that dissipates heat to the air conditioning refrigerant that flows in the first air conditioning user-side division heat exchanger 28a and the second air conditioning user-side division heat exchanger 28b flows into the indoor heat exchanger 61 while flowing in the air conditioning cold/hot water main circuit 8a by driving the air conditioning cold/hot water circulation pump 67. In the indoor heat exchanger 61, the cold water in the air conditioning cold/hot water main circuit 8a exchanges heat with high-temperature air in the housing 60, and the air in the housing 60 is cooled. That is, an indoor part of the housing 60 is cooled. In this case, the cold water that flows on the indoor heat exchanger 61 absorbs heat from the air in the housing 60 to rise in temperature thereof. The temperature-rising cold water is circulated in the air conditioning cold/hot water main circuit 8a by the air conditioning cold/hot water circulation pump 67 and cooled by exchanging heat with the air conditioning refrigerant circuit 5, while flowing between the first air conditioning user-side division heat exchanger 28a and the second air conditioning user-side division heat exchanger 28b again.

Herein, since the first air conditioning user-side division heat exchanger 28a is used for the cooling operation by the vapor compression cycle, the cooling and dehumidifying operation may be performed, in which the temperature of the water that flows in the air conditioning cold/hot water circulation circuit 8 is lower than a room dew-point temperature of the housing 60.

Meanwhile, in the hot water supplying refrigerant circuit 6, gas refrigerant compressed and subjected to the high temperature and the high pressure by the hot water supplying compressor 41 flows into the hot water supplying user-side heat exchanger 42. The high-temperature and high-pressure gas refrigerant that flows in the hot water supplying user-side heat exchanger 42 dissipates heat to the water that flows in the hot water supply circuit 9 to be condensed and liquefied. The liquefied high-pressure refrigerant flows into the hot water supplying refrigerant tank 46 and thereafter, is depressurized and expanded by the hot water supplying expansion valve 43 of which the opening level is controlled at a predetermined opening level, and becomes low-temperature and low-pressure vapor-liquid two-phase refrigerant. The vapor-liquid two-phase refrigerant flows dividedly into the hot water supplying heat source-side heat exchanger 44 and the intermediate heat exchanger 23. The vapor-liquid two-phase refrigerant that flows into the hot water supplying heat source-side heat exchanger 44 absorbs heat from the air to be evaporated and becomes low-pressure gas refrigerant. The vapor-liquid two-phase refrigerant that flows on the intermediate heat exchanger 23 absorbs heat from the air conditioning refrigerant that flows on the air conditioning refrigerant circuit 5 to be evaporated and becomes the low-pressure gas refrigerant. The low-pressure gas refrigerant discharged from the hot water supplying heat source-side heat exchanger 44 and the low-pressure gas refrigerant discharged from the intermediate heat exchanger 23 meet at the branch point L and thereafter, flow into the suction port 41a of the hot water supplying compressor 41 and are compressed again by the hot water supplying compressor 41 to become the high-temperature and high-pressure gas refrigerant.

In the intermediate hot water circulation circuit 7, the water stored in the heat storage tank 50 is transported to the intermediate heat exchanger 23 by the intermediate hot water circulation pump 51, and absorbs heat of relatively high temperature from the air conditioning refrigerant that flows on the air conditioning refrigerant circuit 5, while flowing on the intermediate heat exchanger 23. As a result, the water becomes intermediate-temperature water (lukewarm water) by the intermediate heat exchanger 23. The absorbed heat of relatively high temperature is stored in the heat storage tank 50.

In the hot water supply circuit 9, the water stored in the hot water storage tank 70 is transported to the hot water supplying user-side heat exchanger 42 by the hot water supplying circulation pump 71, and absorbs heat of relatively high temperature from the hot water supplying refrigerant that flows on the hot water supplying refrigerant circuit 6, while flowing on the hot water supplying user-side heat exchanger 42. As a result, the water becomes water having a temperature higher than the intermediate temperature by the hot water supplying user-side heat exchanger 42. That is, the water circulated in the hot water supply circuit 9 has a temperature higher than that of the water circulated in the intermediate hot water circulation circuit 7.

In the solar heat circulation circuit 10, water receiving the solar heat collected by the solar heat collector 4 is transported to the solar heat exchanger 91 by the solar heat circulation pump 85. The solar heat stored in the water dissipates heat to the water that flows on the hot water supply residual heat hot water circulation circuit 12 through the solar heat exchanger 91. Therefore, the water that flows on the hot water supply residual heat hot water circulation circuit 12 is heated by the solar heat circulation circuit 10.

In the hot water supply path 11, water having a predetermined temperature, which is acquired by operating the air conditioning hot water supply system, is supplied to the hot water supply load sides according to a demand from the hot water supply load sides.

In the hot water supply residual heat hot water circulation circuit 12, the water stored in the heat storage tank 50 is transported to the solar heat exchanger 91 by the hot water supply residual heat hot water circulation pump 93, and absorbs heat of relatively high temperature from the water that flows on the solar heat circulation circuit 10, while flowing on the solar heat exchanger 91. In the hot water supply residual heat hot water circulation circuit 12, water is heated by using the solar heat which is regenerative energy. The acquired heat of relatively high temperature is stored in the heat storage tank 50. In Operation pattern No. 3, heat exchange by the hot water supply residual heat exchanger 92 is not performed.

The operation by Operation pattern No. 3 may be performed in the case where the cooling and dehumidifying loads are present in the housing 60 when the temperature of the outdoor air is lower than the return temperature (an inlet temperature of the second air conditioning user-side division heat exchanger 28b or an outlet temperature of the air conditioning cold/hot water circulation pump 67) of the water that is circulated in the air conditioning cold/hot water circulation circuit 8, but higher than the room dew-point temperature of the housing 60. For example, since the housing 60 has excellent high sealing and high insulating performances, the room is full of heat due to an influence such as heat emission of electric appliances, such that in spite of an interim period between summer and winter, in the case where cooling and dehumidifying are required in the room, the operation by Operation pattern No. 3 is appropriate. In Operation pattern No. 3, the following controls are preferably performed by the control device la.
(a) Opening/closing the 2-way valves 35a to 35g and the 3-way valves 34a to 34d is controlled so that the vapor compression cycle and the natural circulation type cycle are formed as the air conditioning cycle.
(b) By opening/closing the 2-way valves 49b, 49c, 49d, and 49e according to a situation such as a balance of an exchanged heat amount, switching is controlled like using the intermediate heat exchanger 23 and the hot water supplying heat source-side heat exchanger 44 of the hot water supply cycle simultaneously or using only the intermediate heat exchanger 23.

According to Operation pattern No. 3, since a part of the air conditioning cycle may be operated as the natural circulation type cycle, a workload of the air conditioning compressor 21 may be reduced. According to Operation pattern No. 3, when only the intermediate heat exchanger 23 is used as the evaporator of the hot water supply cycle, the evaporation temperature of the hot water supply cycle is increased by adjusting a valve opening level of the hot water supplying expansion valve 43, thereby improving efficiency of the hot water supply cycle.

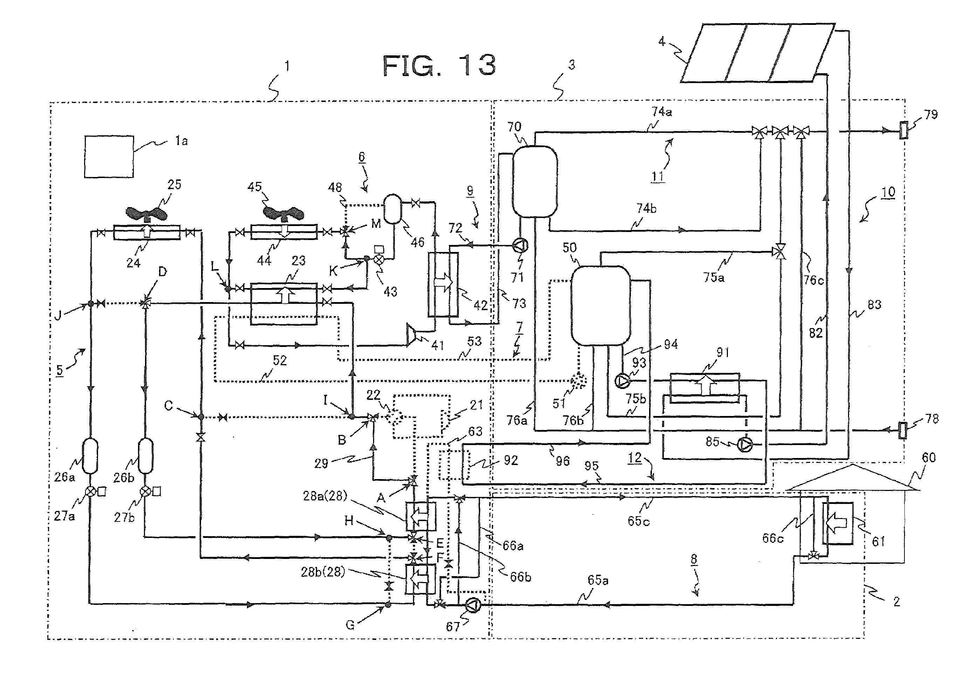

### "Operation pattern No. 4 <Cooling and natural circulation using hot water supply cycle and using outdoor air concurrently>" (see FIG. 13)

Operation pattern No. 4 is an operation pattern in which the cooling operation by the air conditioning refrigerant circuit 5 and the hot water supply operation by the hot water supplying refrigerant circuit 6 are performed, respectively, and particularly, is an operation pattern in which the cooling operation by the air conditioning refrigerant circuit 5 is performed by the natural circulation type cycle. In detail, Operation pattern No. 4 is an operation pattern in which, at an air conditioning cycle side, an operation mode is cooling, the air conditioning compressor 21 is stopped, the first air conditioning user-side division heat exchanger 28a and the second air conditioning user-side division heat exchanger 28b are used as the evaporators in the natural circulation type cycle, and the air conditioning heat source-side heat exchanger 24 and the intermediate heat exchanger 23 are used as the condensers in the natural circulation type cycle, as illustrated in a column of "Operation pattern No. 4" of FIG. 16. Meanwhile, Operation pattern No. 4 is an operation pattern in which, at the hot water supply cycle side, the operation mode is the hot water supply, the hot water supplying compressor 1 is operated, the intermediate heat exchanger 23 and the hot water supplying heat source-side heat exchanger 44 are used as the evaporators, and the hot water supplying user-side heat exchanger 42 is used as the condenser.

The air conditioning refrigerant circuit 5 has a significant feature in that two paths where the air conditioning refrigerant is circulated are independently formed, as illustrated in FIG. 13. In a first path of Operation pattern No. 4, the air conditioning refrigerant flows in sequence on the intermediate heat exchanger 23, the branch point D, the second air conditioning refrigerant tank 26b, the air conditioning auxiliary expansion valve 27b, the branch point H, the branch point E, the first air conditioning user-side division heat exchanger 28a, the branch point A, the air conditioning bypass pipe 29, the branch point B, the branch point I, and the intermediate heat exchanger 23. In a second path of Operation pattern No. 4, the air conditioning refrigerant flows in sequence on the air conditioning heat source-side heat exchanger 24, the branch point J, the first air conditioning refrigerant tank 26a, the air conditioning expansion valve 27a, the branch point G, the second air conditioning user-side heat exchanger 28b, the branch point F, the branch point C, and the air conditioning heat source-side heat exchanger 24. Herein, the natural circulation type cycle where the air conditioning refrigerant is naturally circulated is independently formed in the first path and the second path.

First, in the first path, the air conditioning refrigerant that stays in the intermediate heat exchanger 23 dissipates heat to the hot water supplying refrigerant that flows in the hot water supplying refrigerant circuit 6 to be condensed and liquefied. The liquid refrigerant having high density descends due to the influence of gravity, enters the second air conditioning refrigerant tank 26b, and flows into the first air conditioning user-side division heat exchanger 28a through the air conditioning auxiliary expansion valve 27b. The liquid refrigerant absorbs heat from the temperature-rising cold water circulated in the air conditioning cold/hot water circulation circuit 8 to be evaporated and become gaseous, while flowing in the first air conditioning user-side division heat exchanger 28a. In this case, since the pressure gradient may be formed by the difference in density of the refrigerant, the evaporated refrigerant flows toward the intermediate heat exchanger 23 through the air conditioning bypass pipe 29. As such, in the first path, the natural circulation type cycle is formed, in which the air conditioning refrigerant is naturally circulated.

Contrary to this, in the second path, the air conditioning refrigerant that stays in the air conditioning heat source-side heat exchanger 24 dissipates heat to the air to be condensed and liquefied. The liquid refrigerant having high density descends due to gravity, enters the first air conditioning refrigerant tank 26a, and flows into the second air conditioning user-side division heat exchanger 28b through the air conditioning expansion valve 27a. The liquid refrigerant absorbs heat from the temperature-rising cold water circulated in the air conditioning cold/hot water circulation circuit 8 to be evaporated and become gaseous while flowing in the second air conditioning user-side division heat exchanger 28b. In this case, since a pressure gradient may be formed by the difference in density of the refrigerant, the evaporated refrigerant flows toward the air conditioning heat source-side heat exchanger 24. As such, in the second path, the natural circulation type cycle is formed, in which the air conditioning refrigerant is naturally circulated.

In the air conditioning cold/hot water circulation circuit 8, cold water that dissipates heat to the air conditioning refrigerant that flows in the first air conditioning user-side division heat exchanger 28a and the second air conditioning user-side division heat exchanger 28b flows into the indoor heat exchanger 61 while flowing in the air conditioning cold/hot water main circuit 8a by driving the air conditioning cold/hot water circulation pump 67. In the indoor heat exchanger 61, the cold water in the air conditioning cold/hot water main circuit 8a exchanges heat with high-temperature air in the housing 60, and the air in the housing 60 is cooled. That is, an indoor part of the housing 60 is cooled. In this case, the cold water that flows on the indoor heat exchanger 61 absorbs heat from the air in the housing 60 to rise in temperature thereof. The temperature-rising cold water is circulated in the air conditioning cold/hot water main circuit 8a by the air conditioning cold/hot water circulation pump 67 and cooled by exchanging heat with the air conditioning refrigerant circuit 5 while flowing between the first air conditioning user-side division heat exchanger 28a and the second air conditioning user-side division heat exchanger 28b again.

Herein, the temperature of the air conditioning refrigerant that flows in the second air conditioning user-side division heat exchanger 28b depends on the air. As a result, when the outdoor air temperature is higher than the room dew-point temperature of the housing 60, the indoor temperature may not be lowered to a temperature which is equal to or less than the dew point temperature only by operating the natural circulation type cycle formed in the second path. However, in Operation pattern No. 4, since the temperature of the air conditioning refrigerant that flows in the first air conditioning user-side division heat exchanger 28a is determined by exchanging heat with the hot water supplying refrigerant, which is performed by the intermediate heat exchanger 23, the temperature of the air conditioning refrigerant that flows into the first air conditioning user-side division heat exchanger 28a may be arbitrarily adjusted by controlling the valve opening level of the hot water supplying expansion valve 43 installed in the hot water supplying refrigerant circuit 6. Accordingly, when the natural circulation type cycle formed in the first path is operated, even in the case where the outdoor air temperature is higher than the room dew-point temperature of the housing 60, the indoor part of the housing 60 may be dehumidified and cooled.

Meanwhile, in the hot water supplying refrigerant circuit 6, gas refrigerant compressed and subjected to the high temperature and the high pressure by the hot water supplying compressor 41 flows into the hot water supplying user-side heat exchanger 42. The high-temperature and high-pressure gas refrigerant that flows in the hot water supplying user-side heat exchanger 42 dissipates heat to the water that flows in the hot water supply circuit 9 to be condensed and liquefied. The liquefied high-pressure refrigerant flows into the hot water supplying refrigerant tank 46 and thereafter, is depressurized and expanded by the hot water supplying expansion valve 43 of which the opening level is controlled at a predetermined opening level, and becomes the low-temperature and low-pressure vapor-liquid two-phase refrigerant. The vapor-liquid two-phase refrigerant flows dividedly into the hot water supplying heat source-side heat exchanger 44 and the intermediate heat exchanger 23. The vapor-liquid two-phase refrigerant that flows into the hot water supplying heat source-side heat exchanger 44 absorbs heat from the air to be evaporated and becomes the low-pressure gas refrigerant. The vapor-liquid two-phase refrigerant that flows in the intermediate heat exchanger 23 absorbs heat from the air conditioning refrigerant that flows in the air conditioning refrigerant circuit 5 to be evaporated and becomes the low-pressure gas refrigerant. The low-pressure gas refrigerant discharged from the hot water supplying heat source-side heat exchanger 44 and the low-pressure gas refrigerant discharged from the intermediate heat exchanger 23 meet at the branch point L and thereafter, flow into the suction port 41a of the hot water supplying compressor 41 and are compressed again by the hot water supplying compressor 41 to become the high-temperature and high-pressure gas refrigerant.

In Operation pattern No. 4, since the intermediate hot water circulation pump 51 is stopped, the water in the intermediate hot water circulation circuit 7 is not circulated.

In the hot water supply circuit 9, the water stored in the hot water storage tank 70 is transported to the hot water supplying user-side heat exchanger 42 by the hot water supplying circulation pump 71, and absorbs heat of relatively high temperature from the hot water supplying refrigerant that flows in the hot water supplying refrigerant circuit 6, while flowing on the hot water supplying user-side heat exchanger 42. As a result, the water becomes water having a temperature higher than the intermediate temperature by the hot water supplying user-side heat exchanger 42. That is, the water circulated in the hot water supply circuit 9 has a temperature higher than that of the water circulated in the intermediate hot water circulation circuit 7.

In the solar heat circulation circuit 10, water receiving the solar heat collected by the solar heat collector 4 is transported to the solar heat exchanger 91 by the solar heat circulation pump 85. The solar heat stored in the water dissipates heat to the water that flows on the hot water supply residual heat hot water circulation circuit 12 through the solar heat exchanger 91. Therefore, the water that flows on the hot water supply residual heat hot water circulation circuit 12 is heated by the solar heat circulation circuit 10.

In the hot water supply path 11, hot water acquired by operating the air conditioning hot water supply system is supplied to the hot water supply load sides according to a demand from the hot water supply load sides.

In the hot water supply residual heat hot water circulation circuit 12, the water stored in the heat storage tank 50 is transported to the solar heat exchanger 91 by the hot water supply residual heat hot water circulation pump 93, and absorbs heat of relatively high temperature from the water that flows on the solar heat circulation circuit 10, while flowing on the solar heat exchanger 91. In the hot water supply residual heat hot water circulation circuit 12, water is heated by using the solar heat which is regenerative energy. The acquired heat of relatively high temperature is stored in the heat storage tank 50. In Operation pattern No. 4, heat exchange by the hot water supply residual heat exchanger 92 is not performed.

The operation by Operation pattern No. 4 may be performed when the outdoor air temperature is lower than the outdoor air temperature applied with Operation pattern No. 3 or when the indoor cooling load is small and it is necessary to perform the operation by decreasing the rpm of the air conditioning compressor 21, or when it is necessary to intermittently perform the operation by temporarily stopping the air conditioning compressor 21. In Operation pattern No. 4, the following controls are preferably performed by the control device la.
(a) Opening/closing the 2-way valves 35a to 35g and the 3-way valves 34a to 34d is controlled so that two natural circulation type cycles for Operation pattern No. 4 are formed as the air conditioning cycle.
(b) By opening/closing the 2-way valves 49b, 49c, 49d, and 49e according to a situation such as a balance of an exchanged heat amount, switching is controlled like using the intermediate heat exchanger 23 and the hot water supplying heat source-side heat exchanger 44 of the hot water supply cycle simultaneously or using only the intermediate heat exchanger 23.

According to Operation pattern No. 4, since the air conditioning compressor 21 need not be operated, power consumption in the entire air conditioning hot water supply system may be reduced.

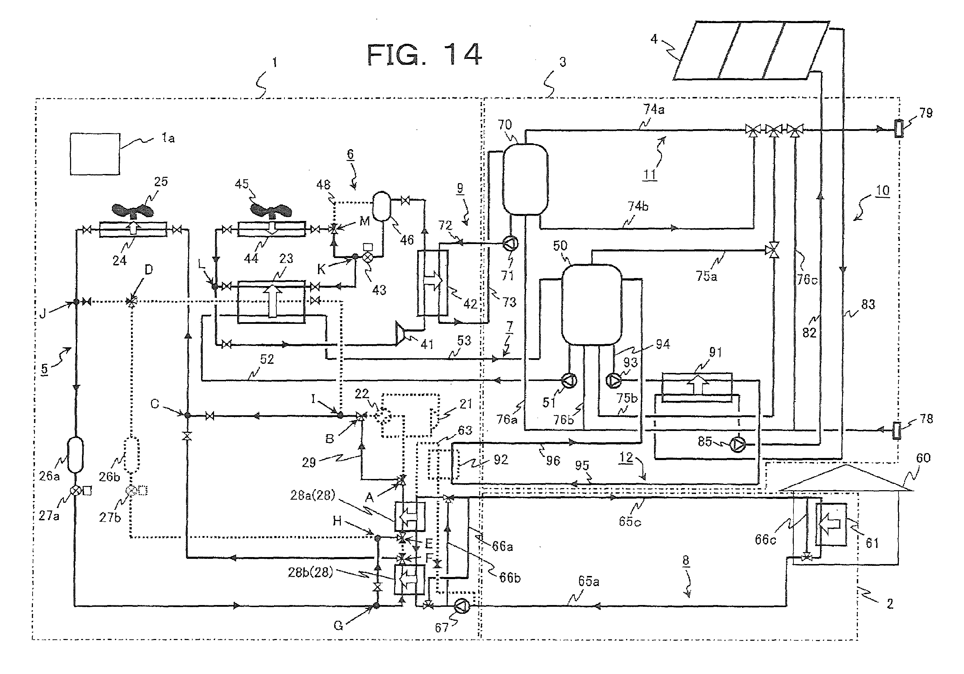

### "Operation pattern No. 5 <Natural circulation cooling using outdoor air>" (see FIG. 14)

Operation pattern No. 5 is an operation pattern in which the cooling operation by the air conditioning refrigerant circuit 5 and the hot water supply operation by the hot water supplying refrigerant circuit 6 are performed, respectively, and particularly, is an operation pattern in which the cooling operation by the air conditioning refrigerant circuit 5 is performed by the natural circulation type cycle. In detail, Operation pattern No. 5 is an operation pattern in which, at an air conditioning cycle side, an operation mode is cooling, the air conditioning compressor 21 is stopped, the first air conditioning user-side division heat exchanger 28a and the second air conditioning user-side division heat exchanger 28b are used as the evaporators in the natural circulation type cycle, the air conditioning heat source-side heat exchanger 24 is used as the condenser in the natural circulation type cycle, and the intermediate heat exchanger 23 is not used, as illustrated in a column of "Operation pattern No. 5" of FIG. 16. Meanwhile, Operation pattern No. 5 is an operation pattern in which, at the hot water supply cycle side, the operation mode is hot water supply, the hot water supplying compressor 1 is operated, the intermediate heat exchanger 23 and the hot water supplying heat source-side heat exchanger 44 are used as the evaporators, and the hot water supplying user-side heat exchanger 42 is used as the condenser.

The air conditioning refrigerant circuit 5 has a significant feature in that one natural circulation cycle is formed by using the air conditioning heat source-side heat exchanger 24 and the air conditioning user-side division heat exchangers 28a and 28b without using the intermediate heat exchanger 23, as illustrated in FIG. 14. In Operation pattern No. 5, as a path where the air conditioning refrigerant flows in the air conditioning refrigerant circuit 5, a path is formed, in which the air conditioning refrigerant flows in sequence on the air conditioning heat source-side heat exchanger 24, the branch point J, the first air conditioning refrigerant tank 26a, the air conditioning expansion valve 27a, the branch point G, the branch point H, the branch point E, the first air conditioning user-side division heat exchanger 28a, the branch point A, the air conditioning bypass pipe 29, the branch point B, the branch point I, the branch point C, and the air conditioning heat source-side heat exchanger 24 and a path is formed, in which the air conditioning refrigerant flows in the air conditioning heat source-side heat exchanger 24, the branch point J, the first air conditioning refrigerant tank 26a, the air conditioning expansion valve 27a, the branch point G, the second air conditioning user-side division heat exchanger 28b, the branch point F, the branch point C, and the air conditioning heat source-side heat exchanger 24. That is, in Operation pattern No. 5, a flow of the air conditioning refrigerant by the natural circulation type cycle is established, in which the air conditioning refrigerants which are condensed and liquefied by the air conditioning heat source-side heat exchanger 24 flow dividedly into the first air conditioning user-side division heat exchanger 28a and the second air conditioning user-side division heat exchanger 28b and flow out from the first air conditioning user-side division heat exchanger 28a and the second air conditioning user-side division heat exchanger 28b and meet and thereafter, return to the air conditioning heat source-side heat exchanger 24. The natural circulation type cycle may be formed by connecting the first air conditioning user-side division heat exchanger 28a and the second air conditioning user-side division heat exchanger 28b in parallel.

The air conditioning refrigerant that stays in the air conditioning heat source-side heat exchanger 24 dissipates heat to the air to be condensed and liquefied. The liquid refrigerant having high density descends due to an influence of gravity, enters the first air conditioning refrigerant tank 26a, and reaches the branch point G through the air conditioning expansion valve 27a. At the branch point G, the air conditioning refrigerant flows dividedly into the first air conditioning user-side division heat exchanger 28a and the second air conditioning user-side division heat exchanger 28b. The liquefied air conditioning refrigerant absorbs heat from the temperature-rising cold water circulated in the air conditioning cold/hot water circulation circuit 8 to be evaporated and become gaseous, while flowing in each of the first air conditioning user-side division heat exchanger 28a and the second air conditioning user-side division heat exchanger 28b. In this case, since a pressure gradient may be formed by the difference in density of the refrigerant, the evaporated refrigerant flows toward the air conditioning heat source-side heat exchanger 24 after meeting at the branch point C. As such, the natural circulation cycle in which the air conditioning refrigerant is naturally circulated is formed in the air conditioning refrigerant circuit 5.

Herein, in forming the natural circulation type cycle of Operation pattern No. 5, the first air conditioning user-side division heat exchanger 28a and the second air conditioning user-side division heat exchanger 28b may be connected in parallel or in series. Since resistance when the heat exchangers 28a and 28b are connected in parallel is smaller than that when the heat exchangers 28a and 28b are connected in series, pressure loss between the inlet and outlet of each of the air conditioning user-side division heat exchangers 28a and 28b of the air conditioning refrigerant may be suppressed to be low. In return, when the heat exchangers 28a and 28b are connected in series, the refrigerant pipe and the 2-way valve 35g connecting the branch point G and the branch point H need not be installed, and as a result, the configuration of the air conditioning refrigerant circuit 5 may be simplified and the number of components may be small.

In the air conditioning cold/hot water circulation circuit 8, the cold water that dissipates heat to the air conditioning refrigerant that flows on the first air conditioning user-side division heat exchanger 28a and the second air conditioning user-side division heat exchanger 28b flows into the indoor heat exchanger 61 while flowing in the air conditioning cold/hot water main circuit 8a by driving the air conditioning cold/hot water circulation pump 67. In the indoor heat exchanger 61, the cold water in the air conditioning cold/hot water main circuit 8a exchanges heat with high-temperature air in the housing 60, and the air in the housing 60 is cooled. That is, an indoor part of the housing 60 is cooled. In this case, the cold water that flows on the indoor heat exchanger 61 absorbs heat from the air in the housing 60 to rise in temperature thereof. The temperature-rising cold water is circulated in the air conditioning cold/hot water main circuit 8a by the air conditioning cold/hot water circulation pump 67 and cooled by exchanging heat with the air conditioning refrigerant circuit 5 while flowing between the first air conditioning user-side division heat exchanger 28a and the second air conditioning user-side division heat exchanger 28b again.

Meanwhile, in the hot water supplying refrigerant circuit 6, gas refrigerant compressed and subjected to the high temperature and the high pressure by the hot water supplying compressor 41 flows into the hot water supplying user-side heat exchanger 42. The high-temperature and high-pressure gas refrigerant that flows in the hot water supplying user-side heat exchanger 42 dissipates heat to the water that flows in the hot water supply circuit 9 to be condensed and liquefied. The liquefied high-pressure refrigerant flows into the hot water supplying refrigerant tank 46 and thereafter, is depressurized and expanded by the hot water supplying expansion valve 43 of which the opening level is controlled at a predetermined opening level, and becomes the low-temperature and low-pressure vapor-liquid two-phase refrigerant. The vapor-liquid two-phase refrigerant flows dividedly into the hot water supplying heat source-side heat exchanger 44 and the intermediate heat exchanger 23. The vapor-liquid two-phase refrigerant that flows into the hot water supplying heat source-side heat exchanger 44 absorbs heat from the air to be evaporated and becomes the low-pressure gas refrigerant. The vapor-liquid two-phase refrigerant that flows on the intermediate heat exchanger 23 absorbs heat from the water (intermediate-temperature water) that flows on the intermediate hot water circulation circuit 7 to be evaporated and becomes the low-pressure gas refrigerant. The low-pressure gas refrigerant discharged from the hot water supplying heat source-side heat exchanger 44 and the low-pressure gas refrigerant discharged from the intermediate heat exchanger 23 meet at the branch point L and thereafter, flow into the suction port 41a of the hot water supplying compressor 41 and are compressed again by the hot water supplying compressor 41 to become the high-temperature and high-pressure gas refrigerant.

In the intermediate hot water circulation circuit 7, intermediate-temperature water stored in the heat storage tank 50 is transported to the intermediate heat exchanger 23 by the intermediate hot water circulation pump 51. The intermediate-temperature water dissipates heat of relatively high temperature to the hot water supplying refrigerant that flows in the hot water supplying refrigerant circuit 6 through the intermediate heat exchanger 23. That is, in Operation pattern No. 5, since the intermediate heat exchanger 23 is used as the evaporator, the heat of relatively high temperature stored in the heat storage tank 50 is used.

In the hot water supply circuit 9, the water stored in the hot water storage tank 70 is transported to the hot water supplying user-side heat exchanger 42 by the hot water supplying circulation pump 71, and absorbs heat of relatively high temperature from the hot water supplying refrigerant that flows in the hot water supplying refrigerant circuit 6, while flowing on the hot water supplying user-side heat exchanger 42. As a result, the water becomes water having a temperature higher than the intermediate temperature by the hot water supplying user-side heat exchanger 42. That is, the water circulated in the hot water supply circuit 9 has a temperature higher than that of the water circulated in the intermediate hot water circulation circuit 7.

In the solar heat circulation circuit 10, water receiving the solar heat collected by the solar heat collector 4 is transported to the solar heat exchanger 91 by the solar heat circulation pump 85. The solar heat stored in the water dissipates heat to the water that flows on the hot water supply residual heat hot water circulation circuit 12 through the solar heat exchanger 91. Therefore, the water that flows on the hot water supply residual heat hot water circulation circuit 12 is heated by the solar heat circulation circuit 10.

In the hot water supply path 11, water having a predetermined temperature, which is acquired by operating the air conditioning hot water supply system, is supplied to the hot water supply load sides according to a demand from the hot water supply load sides.

In the hot water supply residual heat hot water circulation circuit 12, the water stored in the heat storage tank 50 is transported to the solar heat exchanger 91 by the hot water supply residual heat hot water circulation pump 93, and absorbs heat of relatively high temperature from the water that flows on the solar heat circulation circuit 10, while flowing on the solar heat exchanger 91. In the hot water supply residual heat hot water circulation circuit 12, water is heated by using the solar heat which is regenerative energy. The acquired heat of relatively high temperature is stored in the heat storage tank 50. In Operation pattern No. 5, heat exchange by the hot water supply residual heat exchanger 92 is not performed.

The operation by Operation pattern No. 5 may be performed in the case where the temperature of the outdoor air is lower than the return temperature (an inlet temperature of the second air conditioning user-side division heat exchanger 28b or an outlet temperature of the air conditioning cold/hot water circulation pump 67) of the water that is circulated in the air conditioning cold/hot water circulation circuit 8, and the cooling load is present but dehumidifying need not be performed with respect to the housing 60. For example, in the case where the housing 60 has excellent high sealing and high insulating performances, such that the indoor temperature is comparatively high even in winter, and thus cooling is required, the operation by Operation pattern No. 5 is appropriate. The control device 1a controls opening/closing the 2-way valves 35a to 35g and the 3-way valves 34a to 34d so that the natural circulation type cycle required for Operation pattern No. 5 is formed.

According to Operation pattern No. 5, since the air conditioning compressor 21 need not be operated, power consumption in the entire air conditioning hot water supply system may be reduced.

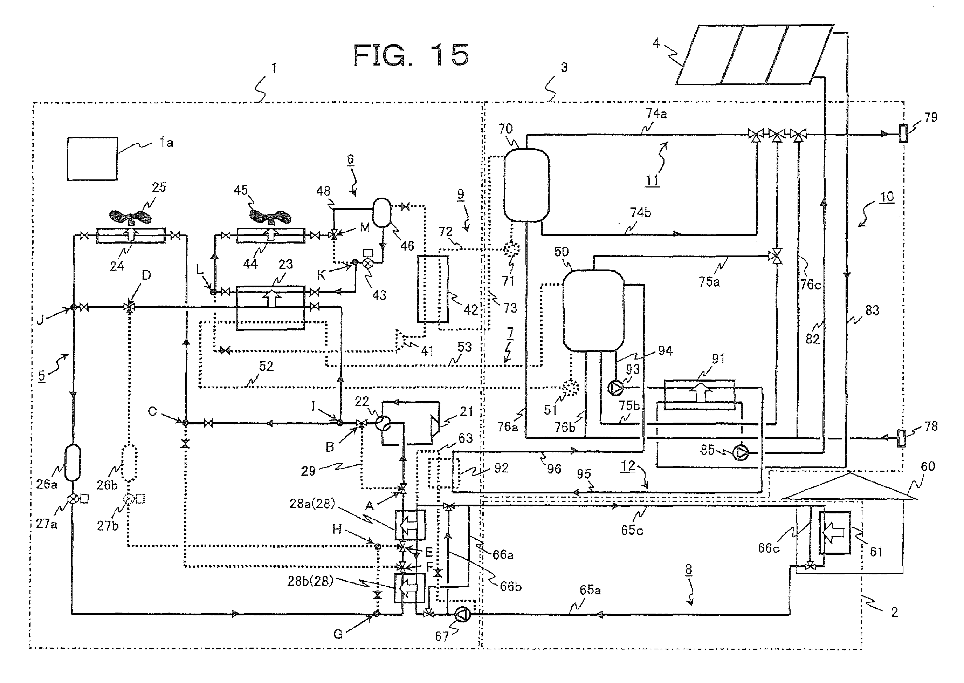

### "Operation pattern No. 6 <Operating cooling at maximum performance>" (see FIG. 15)

Operation pattern No. 6 is an operation pattern in which a maximum cooling operation by the air conditioning refrigerant circuit 5 is performed by using the hot water supplying refrigerant circuit 6. This operation pattern has a significant feature in that the hot water supplying refrigerant is naturally circulated in the hot water supplying refrigerant circuit 6. In detail, Operation pattern No. 6 is an operation pattern in which, at an air conditioning cycle side, an operation mode is cooling, the air conditioning compressor 21 is operated, the first air conditioning user-side division heat exchanger 28a and the second air conditioning user-side heat exchanger 28b are used as evaporators, and the air conditioning heat source-side heat exchanger 24 and the intermediate heat exchanger 23 are used as condensers, as illustrated in a column of "Operation pattern No. 16" of FIG. 16. Meanwhile, Operation pattern No. 6 is an operation pattern in which, at the hot water supply cycle side, the operation mode is outdoor air dissipation, the hot water supplying compressor 1 is stopped, the intermediate heat exchanger 23 is used as the evaporator of the natural circulation type cycle, the hot water supplying heat source-side heat exchanger 44 is used as the condenser of the natural circulation type cycle, and the hot water supplying user-side heat exchanger 42 is not used.

In the air conditioning refrigerant circuit 5, the high-temperature and high-pressure gas refrigerant discharged from the discharge port 21b of the air conditioning compressor 21 flows dividedly into the intermediate heat exchanger 23 and the air conditioning heat source-side heat exchanger 24 through the 4-way valve 22. The high-temperature and high-pressure gas refrigerant that flows into the intermediate heat exchanger 23 dissipates heat to the hot water supplying refrigerant that flows in the hot water supplying circuit 6 to be condensed and liquefied. The high-temperature and high-pressure gas refrigerant that flows into the air conditioning heat source-side heat exchanger 24 dissipates heat to the air to be condensed and liquefied. High-pressure liquid refrigerant that meets at the branch point J flows into the first air conditioning refrigerant tank 26a and thereafter, is depressurized and expanded by the air conditioning expansion valve 27a of which an opening level is adjusted as a predetermined opening level, and becomes low-temperature and low-pressure vapor-liquid two-phase refrigerant. The vapor-liquid two-phase refrigerant flows into the second air conditioning user-side division heat exchanger 28b and the first air conditioning user-side division heat exchanger 28b in sequence. The vapor-liquid two-phase refrigerant that flows in the second air conditioning user-side division heat exchanger 28b and the first air conditioning user-side division heat exchanger 28a absorbs heat from cold water having rising temperature, which flows in the air conditioning cold/hot water circulation circuit 8, to be evaporated and becomes low-pressure gas refrigerant. The low-pressure gas refrigerant flows into the suction port 21a of the air conditioning compressor 21 through the 4-way valve 22 and is compressed by the air conditioning compressor 21 again to become the high-temperature and high-pressure gas refrigerant.

In the air conditioning cold/hot water circulation circuit 8, the cold water that dissipates heat to the air conditioning refrigerant that flows on the first air conditioning user-side division heat exchanger 28a and the second air conditioning user-side division heat exchanger 28b flows into the indoor heat exchanger 61 while flowing in the air conditioning cold/hot water main circuit 8a by driving the air conditioning cold/hot water circulation pump 67. In the indoor heat exchanger 61, the cold water in the air conditioning cold/hot water main circuit 8a exchanges heat with high-temperature air in the housing 60, and the air in the housing 60 is cooled. That is, an indoor part of the housing 60 is cooled. In this case, the cold water that flows on the indoor heat exchanger 61 absorbs heat from the air in the housing 60 to rise in temperature thereof. The temperature-rising water is circulated in the air conditioning cold/hot water main circuit 8a by the air conditioning cold/hot water circulation pump 67 and exchanges heat with the air conditioning refrigerant circuit 5 and is cooled, while flowing between the first air conditioning user-side division heat exchanger 28a and the second air conditioning user-side division heat exchanger 28b again.

Meanwhile, in the hot water supplying refrigerant circuit 6, as a path where the hot water supplying refrigerant flows, a path is formed, in which the hot water supplying refrigerant flows in the hot water supplying heat source-side heat exchanger 44, the branch point M, the hot water supplying bypass pipe 48, the hot water supplying refrigerant tank 46, the hot water supplying expansion valve 43, the branch point K, the intermediate heat exchanger 23, the branch point L, and the hot water supplying heat source-side heat exchanger 44 in sequence.

The hot water supplying refrigerant that stays in the hot water supplying heat source-side heat exchanger 44 dissipates heat to the air to be condensed and liquefied. The liquid refrigerant having high density descends due to the influence of gravity, and flows into the hot water supplying refrigerant tank 46 through the hot water supplying bypass pipe 48. The liquefied hot water supplying refrigerant flows into the intermediate heat exchanger 23 through the hot water supplying expansion valve 43 of which the opening level is controlled at a predetermined valve opening level, and absorbs heat from the high-temperature air conditioning refrigerant that flows in the air conditioning refrigerant circuit 5 through the intermediate heat exchanger 23 to be evaporated and become gaseous. In this case, since a pressure gradient may be formed by the difference in density of the refrigerant, the evaporated hot water supplying refrigerant flows toward the hot water supplying heat source-side heat exchanger 44 again through the branch point L. As such, the natural circulation cycle in which the hot water supplying refrigerant is naturally circulated is formed in the hot water supplying refrigerant circuit 6.

In the intermediate hot water circulation circuit 7, since the intermediate hot water circulation pump 51 is stopped, water is not circulated. Even in the hot water supply circuit 9, since the hot water supplying circulation pump 71 is stopped, the water in the hot water supply circuit 9 is not circulated.

In the solar heat circulation circuit 10, water receiving the solar heat collected by the solar heat collector 4 is transported to the solar heat exchanger 91 by the solar heat circulation pump 85. The solar heat stored in the water dissipates heat to the water that flows on the hot water supply residual heat hot water circulation circuit 12 through the solar heat exchanger 91. Therefore, the water that flows on the hot water supply residual heat hot water circulation circuit 12 is heated by the solar heat circulation circuit 10.

In the hot water supply path 11, water having a predetermined temperature, which is acquired by operating the air conditioning hot water supply system, is supplied to the hot water supply load sides according to a demand from the hot water supply load sides.

In the hot water supply residual heat hot water circulation circuit 12, the water stored in the heat storage tank 50 is transported to the solar heat exchanger 91 by the hot water supply residual heat hot water circulation pump 93, and absorbs heat of relatively high temperature from the water that flows on the solar heat circulation circuit 10, while flowing on the solar heat exchanger 91. In the hot water supply residual heat hot water circulation circuit 12, water is heated by using the solar heat which is regenerative energy. The acquired heat of relatively high temperature is stored in the heat storage tank 50. In Operation pattern No. 6, heat exchange by the hot water supply residual heat exchanger 92 is not performed.

The operation by Operation pattern No. 6 may be performed when the heat amount is sufficiently stored in the hot water storage tank 70 or the heat storage tank 50 as a case where the outdoor air temperature is high and the cooling load is large during the summer evening. The control device 1a controls opening/closing the 2-way valves and the 3-way valves so that the natural circulation type cycle is formed in the hot water supplying circuit 6.

According to Operation pattern No. 6, since two heat exchangers of the intermediate heat exchanger 23 and the air conditioning heat source-side heat exchanger 24 may be used as the condensers, the heat dissipation amount of the air conditioning cycle may be ensured. Accordingly, in Operation pattern No. 6, the cooling performance is improved and cooling may be efficiently performed.

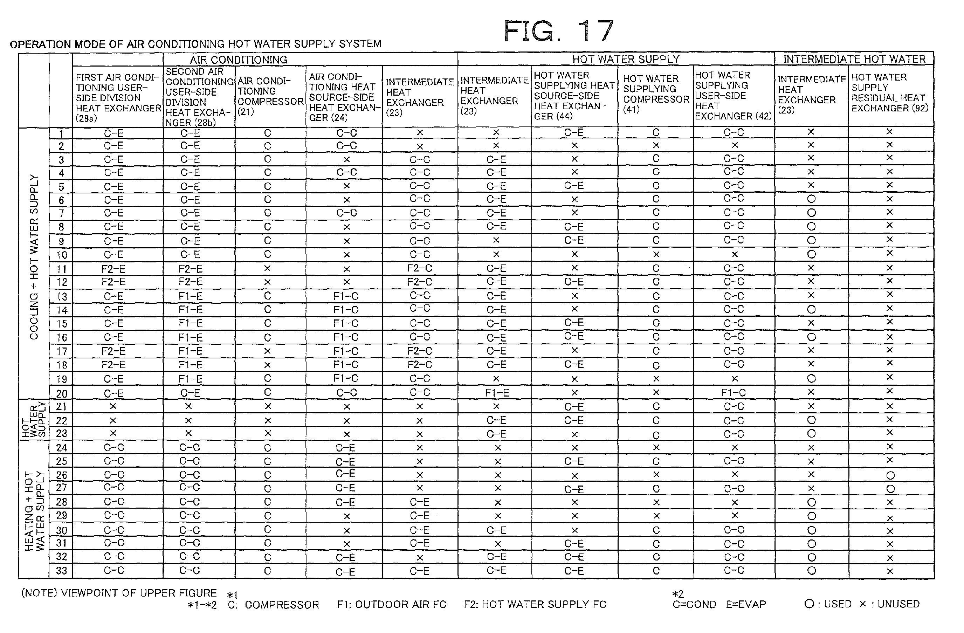

Besides, in the air conditioning hot water supply system according to the embodiment of the present invention, an operation by an operation pattern illustrated in FIG. 17 may be performed. FIG. 17 illustrates total 33 operation modes and exemplifies Nos. 1 to 20 as operation modes to perform the cooling operation and the hot water supply operation, Nos. 21 to 23 as operation modes to perform the hot water supply operation, and Nos. 24 to 33 as operation modes to perform the heating operation and the hot water supply operation. Herein, only a viewpoint of FIG. 17 will be described and a detailed description of each operation mode will be omitted. In FIG. 17, there is a location marked with "*1 - *2" (however, *1 is any one of C, F1, and F2 and *2 is any one of C and E) by linking alphabetical characters with a hyphen. Herein, *1 indicates a type of the cycle and *2 indicates which one of the evaporator (EVAP) and the condenser (COND) the heat exchanger is used as.

For example, when "C - E" is marked, the marking means that the heat exchanger is used as the evaporator of the vapor compression cycle. When "F1 - E" is marked, the marking means that the heat exchanger is used as the evaporator of the natural circulation type cycle by exchanging heat with the outdoor air. When "F2 - C" is marked, the marking means that the heat exchanger is used as the condenser of the natural circulation type cycle by exchanging heat with the hot water supply cycle. A mark "C" represented in columns of the air conditioning compressor 21 and the hot water supplying compressor 41 indicates the vapor compression cycle, but may indicate that the compressor is operated. In the figure, a mark ○ indicates "used" and a mark × indicates "unused".

When a detailed example of the operation mode is described in terms of the figure, for example, in Operation mode No. 9, the first air conditioning user-side division heat exchanger 28a is marked with "C - E", the second air conditioning user-side division heat exchanger 28b is marked with "C -E", the air conditioning compressor 21 is marked with "C", the air conditioning heat source-side heat exchanger 24 is marked with "×", and the intermediate heat exchanger 23 is marked with "C - C" at the air conditioning side, and the intermediate heat exchanger 23 is marked with "×", the hot water supplying heat source-side heat exchanger 44 is marked with "C - E", the hot water supplying compressor 41 is marked with "C", and the hot water supplying user-side heat exchanger 42 is marked with "C - C" at the hot water supply side, and the intermediate heat exchanger 23 is marked with "○" and the hot water supply residual heat exchanger 92 is marked with "×" at the intermediate hot water side.

From these markings, in Operation mode No. 9, at the air conditioning side, the first air conditioning user-side division heat exchanger 28a is used as "the evaporator of the vapor compression cycle", the second air conditioning user-side division heat exchanger 28b is used as "the evaporator of the vapor compression cycle", the air conditioning compressor 21 is "operated", the air conditioning heat source-side heat exchanger 24 is "unused", and the intermediate heat exchanger 23 is used as "the condenser of the vapor compression cycle". Meanwhile, at the hot water supply side of Operation mode No. 9, the intermediate heat exchanger 23 is "unused", the hot water supplying heat source-side heat exchanger 44 is used as "the evaporator of the vapor compression cycle", the hot water supplying compressor 41 is "operated", and the hot water supplying user-side heat exchanger 42 is used as "the condenser of the vapor compression cycle". At the intermediate hot water side of Operation mode No. 9, the intermediate heat exchanger 23 is "used" and the hot water supply residual heat exchanger 92 is "unused".

When an example of other operation mode is described in terms of the figure, in Operation mode No. 18, the first air conditioning user-side division heat exchanger 28a is marked with "F2 - E", the second air conditioning user-side division heat exchanger 28b is marked with "F1 -E", the air conditioning compressor 21 is marked with "×", the air conditioning heat source-side heat exchanger 24 is marked with "F1 - C", and the intermediate heat exchanger 23 is marked with "F2 - C" at the air conditioning side, and the intermediate heat exchanger 23 is marked with "C - E", the hot water supplying heat source-side heat exchanger 44 is marked with "C - E", the hot water supplying compressor 41 is marked with "C", and the hot water supplying user-side heat exchanger 42 is marked with "C - C" at the hot water supply side, and the intermediate heat exchanger 23 is marked with "×" and the hot water supply residual heat exchanger 92 is marked with "×" at the intermediate hot water side.

From these markings, in Operation mode No. 18, at the air conditioning side, the first air conditioning user-side division heat exchanger 28a is used as "the evaporator of the natural circulation type cycle by exchanging heat with the hot water supply cycle", the second air conditioning user-side division heat exchanger 28b is used as "the evaporator of the natural circulation type cycle by exchanging heat with the outdoor air", the air conditioning compressor 21 is "stopped", the air conditioning heat source-side heat exchanger 24 is used as "the condenser of the natural circulation type cycle by exchanging heat with the outdoor air", and the intermediate heat exchanger 23 is used as "the condenser of the natural circulation type cycle by exchanging heat with the hot water supply cycle". Meanwhile, at the hot water supply side of Operation mode No. 18, the intermediate heat exchanger 23 is used as "the evaporator of the vapor compression cycle", the hot water supplying heat source-side heat exchanger 44 is used as "the evaporator of the vapor compression cycle", the hot water supplying compressor 41 is "operated", and the hot water supplying user-side heat exchanger 42 is used as "the condenser of the vapor compression cycle". At the intermediate hot water side of Operation mode No. 18, both the intermediate heat exchanger 23 and the hot water supply residual heat exchanger 92 are "unused".

As described above, according to the air conditioning hot water supply system according to the embodiment, energy efficiency may be improved by effectively using air conditioning exhaust heat or regenerative energy. Since various operation patterns including the operation by the natural circulation type cycle may be performed, power consumption may be significantly suppressed. In the embodiment, the configuration in which the first air conditioning refrigerant branch path 5b is formed by bypassing the air conditioning compressor 21 and the 4-way valve 22 is described as the example, but only the air conditioning compressor 21 may be bypassed instead of the configuration. Even in this case, since the natural circulation type cycle may be formed in the air conditioning refrigerant circuit 5, the aforementioned effect may be achieved. In the embodiment, the configuration in which both the intermediate heat exchanger 23 and the air conditioning heat source-side heat exchanger 24 are installed at a position higher than the air conditioning user-side heat exchanger 28 (28a and 28b) is described as the example, but instead of the configuration, only any one of the air conditioning heat source-side heat exchanger 24 and the intermediate heat exchanger 23 may be installed at a position higher than the air conditioning user-side heat exchanger 28 (28a and 28b).

### REFERENCE SIGN LIST

5: Air conditioning refrigerant circuit
5a: Air conditioning refrigerant main circuit
5b: First air conditioning refrigerant branch path
5c: Second air conditioning refrigerant branch path
5d: Third air conditioning refrigerant branch path
5e: Fourth air conditioning refrigerant branch path
5f: Fifth air conditioning refrigerant branch path
6: Hot water supplying refrigerant circuit
6a: Hot water supplying refrigerant main circuit
6b: First hot water supplying refrigerant branch path
6c: Second hot water supplying refrigerant branch path
7: Intermediate hot water circulation circuit (intermediate heat medium circuit)
8: Air conditioning cold/hot water circulation circuit (air conditioning heat transfer medium circulation circuit)
9: Hot water supply circuit
10: Solar heat circulation circuit
11: Hot water supply path
12: Hot water supply residual heat hot water circulation circuit
21: Air conditioning compressor
21a: Suction port of air conditioning compressor
21b: Discharge port of air conditioning compressor
22: 4-way valve (air conditioning flow path switching valve)
23: Intermediate heat exchanger
24: Air conditioning heat source-side heat exchanger
27a: Air conditioning expansion valve
27b: Air conditioning auxiliary expansion valve
28: Air conditioning user-side heat exchanger
28a: First air conditioning user-side division heat exchanger
28b: Second air conditioning user-side division heat exchanger
29: Air conditioning bypass pipe
34a, 34b: 3-way valve (air conditioning bypass opening/closing means)
37: Connection refrigerant pipe
41: Hot water supplying compressor
41a: Suction port of hot water supplying compressor
41b: Discharge port of hot water supplying compressor
42: Hot water supplying user-side heat exchanger
43: Hot water supplying expansion valve
44: Hot water supplying heat source-side heat exchanger
47: 3-way valve (hot water supplying bypass opening/closing means)
50: Heat storage tank
60: Housing (cooled space)
61: Indoor heat exchanger
70: Hot water storage tank
A to M: Branch point

## Claims

1. An air conditioning hot water supply system, comprising;
an air conditioning refrigerant circuit performing a cooling operation and a heating operation by switching the cooling operation and the heating operation;
a hot water supplying refrigerant circuit supplying hot water; and
an intermediate heat exchanger exchanging heat between air conditioning refrigerant circulated in the air conditioning refrigerant circuit and hot water supplying refrigerant circulated in the hot water supplying refrigerant circuit,
wherein the air conditioning refrigerant circuit includes an air conditioning refrigerant main circuit that is formed in a loop by sequentially connecting an air conditioning compressor, an air conditioning flow path switching valve, the intermediate heat exchanger, an air conditioning expansion valve, and an air conditioning user-side heat exchanger for exchanging heat with an air conditioning user-side heat transfer medium through a refrigerant pipe,
the hot water supplying refrigerant circuit includes a hot water supplying main circuit that is formed in a loop by sequentially connecting a hot water supplying compressor, a hot water supplying user-side heat exchanger exchanging heat with a hot water supplying user-side heat transfer medium, a hot water supplying expansion valve, and the intermediate heat exchanger through the refrigerant pipe,
a first air conditioning refrigerant branch path bypassing the air conditioning compressor and a second air conditioning refrigerant branch path bypassing the intermediate heat exchanger are installed in the air conditioning refrigerant main circuit,
air conditioning bypass opening/closing means that switches a flow path of the air conditioning refrigerant to any one of a flow path passing through the air conditioning compressor and a flow path passing through the first air conditioning refrigerant branch path is installed on the first air conditioning refrigerant branch path,
an air conditioning heat source-side heat exchanger for exchanging heat between an air conditioning heat source-side heat transfer medium and the air conditioning refrigerant is installed on the second air conditioning refrigerant branch path, and
at least one of the intermediate heat exchanger and the air conditioning heat source-side heat exchanger is installed at a position higher than the air conditioning user-side heat exchanger.

2. The air conditioning hot water supply system of claim 1, wherein:
a natural circulation type cycle is formed in the air conditioning refrigerant circuit, in which the air conditioning refrigerant flows from the air conditioning heat source-side heat exchanger to the air conditioning expansion valve and the air conditioning user-side heat exchanger in sequence and returns to the air conditioning heat source-side heat exchanger due to a difference in density.

3. The air conditioning hot water supply system of claim 1, wherein:
a natural circulation type cycle is formed in the air conditioning refrigerant circuit, in which the air conditioning refrigerant flows from the intermediate heat exchanger to the air conditioning expansion valve and the air conditioning user-side heat exchanger in sequence and returns to the intermediate heat exchanger due to the difference in density.

4. The air conditioning hot water supply system of any one of claims 1 to 3, wherein:
the air conditioning user-side heat exchanger is bi-divided into a first air conditioning user-side division heat exchanger at the air conditioning compressor side and a second air conditioning user-side division heat exchanger at the air conditioning expansion valve side and further, the first air conditioning user-side division heat exchanger and the second air conditioning user-side division heat exchanger are connected through a connection refrigerant pipe, and
a third air conditioning refrigerant branch path connected from a position between the intermediate heat exchanger and the air conditioning expansion valve to the connection refrigerant pipe is installed in the air conditioning refrigerant main circuit, and an air conditioning auxiliary expansion valve is installed on the third air conditioning refrigerant branch path.

5. The air conditioning hot water supply system of claim 4, wherein:
a fourth air conditioning refrigerant branch path connected from a position at the air conditioning compressor side rather than the air conditioning heat source-side heat exchanger to the connection refrigerant pipe is installed on the second air conditioning refrigerant branch path.

6. The air conditioning hot water supply system of claim 5, wherein:
a fifth air conditioning refrigerant branch path connected from a position between the air conditioning expansion valve and the second air conditioning user-side division heat exchanger to a position at the first air conditioning user-side division heat exchanger side rather than the air conditioning auxiliary expansion valve on the third air conditioning refrigerant branch path is installed on the air conditioning refrigerant main circuit.

7. The air conditioning hot water supply system of any one of claims 1 to 6, wherein:
a first hot water supplying refrigerant branch path bypassing the intermediate heat exchanger is installed in the hot water supplying refrigerant main circuit, a hot water supplying heat source-side heat exchanger for exchanging heat between the hot water supplying heat source-side heat transfer medium and the hot water supplying refrigerant is installed on the first hot water supplying refrigerant branch path, and the hot water supplying heat source-side heat exchanger is installed at a position higher than the intermediate heat exchanger,
a second hot water supplying refrigerant branch path connected from a position between the hot water supplying user-side heat exchanger and the hot water supplying expansion valve in the hot water supplying refrigerant main circuit to a position at an inlet side of the hot water supplying heat source-side heat exchanger in the first hot water supplying refrigerant branch path is installed in the hot water supplying refrigerant circuit, and
hot water supplying bypass opening/closing means opening/closing the second hot water supplying refrigerant branch path is installed in the second hot water supplying refrigerant circuit.

8. The air conditioning hot water supply system of any one of claims 4 to 6, wherein:
a vapor compression cycle in which the air conditioning refrigerant flows from a discharge port of the air conditioning compressor to the intermediate heat exchanger, the air conditioning auxiliary expansion valve, and the first air conditioning user-side division heat exchanger in sequence and forcibly returns to a suction port of the air conditioning compressor and a natural circulation type cycle in which the air conditioning refrigerant flows from the air conditioning heat source-side heat exchanger to the air conditioning expansion valve and the second air conditioning user-side division heat exchanger in sequence and returns to the air conditioning heat source-side heat exchanger due to the difference in density are formed in the air conditioning refrigerant circuit.

9. The air conditioning hot water supply system of any one of claims 4 to 6, wherein:
two natural circulation type cycles of a natural circulation type cycle in which the air conditioning refrigerant flows from the intermediate heat exchanger to the air conditioning auxiliary expansion valve and the first air conditioning user-side division heat exchanger in sequence and returns to the intermediate heat exchanger due to the difference in density and a natural circulation type cycle in which the air conditioning refrigerant flows from the air conditioning heat source-side heat exchanger to the air conditioning expansion valve and the second air conditioning user-side division heat exchanger in sequence and returns to the air conditioning heat source-side heat exchanger due to the difference in density are formed in the air conditioning refrigerant circuit.

10. The air conditioning hot water supply system of claim 6, wherein:
a natural circulation type cycle, in which the air conditioning refrigerant flows from the air conditioning heat source-side heat exchanger to the air conditioning expansion valve, and at least one of the first air conditioning user-side division heat exchanger and the second air conditioning user-side division heat exchanger in sequence and returns to the air conditioning heat source-side heat exchanger due to the difference in density is formed in the air conditioning refrigerant circuit.

11. The air conditioning hot water supply system of claim 7, wherein:
a natural circulation type cycle in which the hot water supplying refrigerant flows from the hot water supplying heat source-side heat exchanger to the hot water supplying expansion valve and the intermediate heat exchanger through the second hot water supplying refrigerant branch path in sequence, and returns to the hot water supplying heat source-side heat exchanger due to the difference in density is formed in the hot water supplying refrigerant circuit.

12. The air conditioning hot water supply system of any one of claims 1 to 7, wherein:
an air conditioning heat transfer medium circulation circuit is formed by connecting the air conditioning user-side heat exchanger and an indoor heat exchanger installed in a cooled space through a pipe and water or brine as the air conditioning user-side heat transfer medium is circulated in the air conditioning heat transfer medium circulation circuit.

13. The air conditioning hot water supply system of any one of claims 1 to 7, wherein:
a hot water supply circuit is formed in a loop by connecting the hot water supplying user-side heat exchanger and a hot water storage tank capable of storing heat through a pipe and water as a hot water supplying user-side heat transfer medium is circulated in the hot water supply circuit.

14. The air conditioning hot water supply system of any one of claims 1 to 7, wherein:
an intermediate heat medium circuit is formed in a loop by connecting the intermediate heat exchanger and a heat storage tank capable of storing heat through a pipe and water is circulated in the intermediate heat medium circuit to exchange heat among three fluids of an air conditioning refrigerant circulated in the air conditioning refrigerant circuit, hot water supplying refrigerant circulated in the hot water supplying refrigerant circuit, and water circulated in the intermediate heat medium circuit through the intermediate heat exchanger.
